(19) Europäisches Patentamt
European Patent Office
Office européen des brevets

(11) **EP 4 641 908 A1**

(12) **EUROPEAN PATENT APPLICATION**
published in accordance with Art. 153(4) EPC

(43) Date of publication:
**29.10.2025 Bulletin 2025/44**

(21) Application number: **22969204.1**

(22) Date of filing: **22.12.2022**

(51) International Patent Classification (IPC):
**H02M 7/49** (2007.01)    **H02M 7/48** (2007.01)

(52) Cooperative Patent Classification (CPC):
**H02M 7/48; H02M 7/49**

(86) International application number:
**PCT/JP2022/047290**

(87) International publication number:
**WO 2024/134818 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **TANAKA, Miwako
  Tokyo 100-8310 (JP)**
• **NAKAYAMA, Akito
  Tokyo 100-8310 (JP)**
• **HIGAKI, Yusuke
  Tokyo 100-8310 (JP)**

(74) Representative: **Hoffmann Eitle
Patent- und Rechtsanwälte PartmbB
Arabellastraße 30
81925 München (DE)**

(54) **POWER CONVERSION DEVICE**

(57)    A power conversion device (100) includes a power converter (1) in which leg circuits (8) having positive-side and negative-side arms (9) connected in series are connected in parallel, and a control unit (7) which controls the power converter (1). The positive-side and negative-side arms (9) each include one or more converter cells (10) connected in series and each having a series unit in which semiconductor switching elements (12U, 12L) are connected in series and a capacitor (15) connected in parallel to the series unit. The control unit (7) includes a gate signal generation unit (90) which generates gate signals (GU, GL) for driving the semiconductor switching elements (12U, 12L), by comparing arm modulation commands with carrier waves, and a gate signal switchover determination unit (80) which determines whether or not to switch the number of times of ON/OFF change of each gate signal per one cycle of the carrier wave.

FIG. 4

**Description**

TECHNICAL FIELD

The present disclosure relates to a power conversion device.

BACKGROUND ART

In recent years, in a power conversion device used for a high-voltage purpose such as a power grid, a multilevel converter in which a plurality of converter cells each including a capacitor are connected in series in a multiplexed manner has been put to practical use. Such a converter is called a modular multilevel converter (hereinafter, referred to as MMC) or a cascade multilevel converter (hereinafter, referred to as CMC), and is used for conversion from three-phase AC to DC or conversion opposite thereto, for example. The converter generates output voltage using capacitor voltages of the converter cells connected in series in a multiplexed manner.

One of switching methods for the MMC is a phase shift PWM method. In this method, a modulation command and a carrier wave are compared with each other, and in accordance with the magnitude relationship therebetween, a gate signal is determined. In general, adjustment is performed so that one gate pulse is generated per one cycle of the carrier wave. Capacitor voltage in each converter cell of the MMC changes with charging/discharging of current flowing through an arm. Therefore, in a case where the frequency of the carrier wave is low, if the phase shift PWM method is applied to the MMC and adjustment is performed so that one gate pulse is generated per one cycle of the carrier wave, ripple of the capacitor voltage increases, so that operation cannot be continued.

In this regard, the following configuration is known: an MMC control device is provided with an improper pulse preventer and is adjusted so that one gate pulse is generated per one cycle of a carrier wave, and if a deviation between a signal level before an improper pulse is removed and a signal level after the improper pulse is removed is great, the frequency of the carrier wave is increased, whereby ripple of capacitor voltage is suppressed and thus followability to output voltage is enhanced (see, for example, Patent Document 1).

CITATION LIST

PATENT DOCUMENT

Patent Document 1: Japanese Laid-Open Patent Publication No. 2021-197809

SUMMARY OF THE INVENTION

PROBLEM TO BE SOLVED BY THE INVENTION

In the configuration in Patent Document 1, in a case where a deviation between a signal level before an improper pulse is removed and a signal level after the improper pulse is removed is great, the frequency of the carrier wave is increased, whereby followability to output voltage can be enhanced. However, when the frequency of the carrier wave is increased, switching loss increases. In this regard, a method using a plurality of carrier wave frequencies is also known. However, followability to output voltage when the carrier wave has a low frequency remains to be a problem.

The present disclosure has been made to solve the above problem, and an object of the present disclosure is to provide a power conversion device that can continue operation and suppress increase in switching loss, without increasing the frequency of a carrier wave, even in a case where operation is performed with the carrier wave having a low frequency.

MEANS TO SOLVE THE PROBLEM

A power conversion device according to the present disclosure includes: a power conversion unit which performs power conversion between AC and DC and has a plurality of leg circuits in which a positive-side arm and a negative-side arm corresponding to each of a plurality of phases are connected in series and connection points therebetween are connected to AC lines for the respective phases, the leg circuits being connected in parallel between positive and negative DC lines; and a control unit which controls the power conversion unit. The positive-side arms and the negative-side arms each include one or a plurality of converter cells connected in series, the one or each converter cell having a series unit in which a plurality of semiconductor switching elements are connected in series and a capacitor connected in parallel to the series unit. The control unit includes: a modulation command generation unit which calculates arm modulation commands respectively for a plurality of the positive-side arms and a plurality of the negative-side arms on the basis of a command value for voltages to be outputted by the plurality of positive-side arms and the plurality of negative-side arms; a gate signal generation unit which generates gate signals for driving the plurality of semiconductor switching elements, by comparing each calculated arm modulation command with a carrier wave; and a gate signal switchover determination unit which determines whether or not to switch a number of times of ON/OFF change of each gate signal per one cycle of the carrier wave, with respect to a frequency of the carrier wave. The gate signal generation unit generates the gate signals on the basis of a determination result of the gate signal switchover determination unit.

EFFECT OF THE INVENTION

The power conversion device according to the present disclosure can continue operation and suppress increase in switching loss, even in a case where operation is performed with a carrier wave having a low frequency.

BRIEF DESCRIPTION OF THE DRAWINGS

[FIG. 1] FIG. 1 schematically shows a configuration of a power conversion system including a power conversion device according to embodiment 1.
[FIG. 2A] FIG. 2A is a configuration diagram showing an example of a converter cell composing the power conversion device.
[FIG. 2B] FIG. 2B is a configuration diagram showing another example of the converter cell composing the power conversion device.
[FIG. 2C] FIG. 2C is a configuration diagram showing another example of the converter cell composing the power conversion device.
[FIG. 3] FIG. 3 illustrates current flowing in the power conversion device.
[FIG. 4] FIG. 4 is a function block diagram showing a configuration of a converter control unit according to embodiment 1.
[FIG. 5] FIG. 5 is a block diagram showing a configuration of an overall voltage control unit included in a modulation command unit generation unit.
[FIG. 6] FIG. 6 is a block diagram showing a configuration of a current control unit included in the modulation command unit generation unit.
[FIG. 7] FIG. 7 is a block diagram showing a configuration of a phase balance control unit included in the modulation command unit generation unit.
[FIG. 8] FIG. 8 is a block diagram showing a configuration of a positive-negative balance control unit included in the modulation command unit generation unit.
[FIG. 9] FIG. 9 is a block diagram showing a configuration of a gate signal switchover determination unit included in the converter control unit.
[FIG. 10] FIG. 10 is a block diagram showing a configuration of a gate signal generation unit included in the converter control unit.
[FIG. 11] FIG. 11 shows a modulation command and a carrier wave in a phase shift PWM method.
[FIG. 12A] FIG. 12A is a flowchart showing operation in the gate signal generation unit and shows operation of a 1-pulse/1-carrier wave cycle signal generation unit.
[FIG. 12B] FIG. 12B is a flowchart showing operation in the gate signal generation unit and shows operation of the 1-pulse/1-carrier wave cycle signal generation unit.
[FIG. 13A] FIG. 13A is a flowchart showing operation in the gate signal generation unit and shows operation of a pulse number adjustment unit.
[FIG. 13B] FIG. 13B is a flowchart showing operation in the gate signal generation unit and shows operation of the pulse number adjustment unit.
[FIG. 14A] FIG. 14A shows a gate signal generated by the 1-pulse/1-carrier wave cycle signal generation unit.
[FIG. 14B] FIG. 14B shows a gate signal generated by the pulse number adjustment unit.
[FIG. 15] FIG. 15 is a function block diagram showing a configuration of a converter control unit according to embodiment 2.
[FIG. 16] FIG. 16 is a block diagram showing a configuration of a gate signal switchover determination unit included in the converter control unit according to embodiment 2.
[FIG. 17] FIG. 17 is a hardware configuration diagram showing an example of the converter control unit according to each of embodiments 1 and 2.

DESCRIPTION OF EMBODIMENTS

Hereinafter, embodiments will be described with reference to the drawings. In the drawings, the same reference characters denote the same or corresponding parts.

Embodiment 1

Hereinafter, a power conversion device according to embodiment 1 will be described with reference to the drawings.

In the present embodiment 1, gate signals are switched on the basis of the magnitudes of capacitor voltages of converter cells. In a case where there is a great change in capacitor voltages of the converter cells, such a limitation that the number of gate pulses is one in one carrier wave cycle is stopped and the number of pulses is adjusted to be equal to or smaller than a predetermined allowable value.

<Entire configuration of power conversion system and configuration of power conversion device>

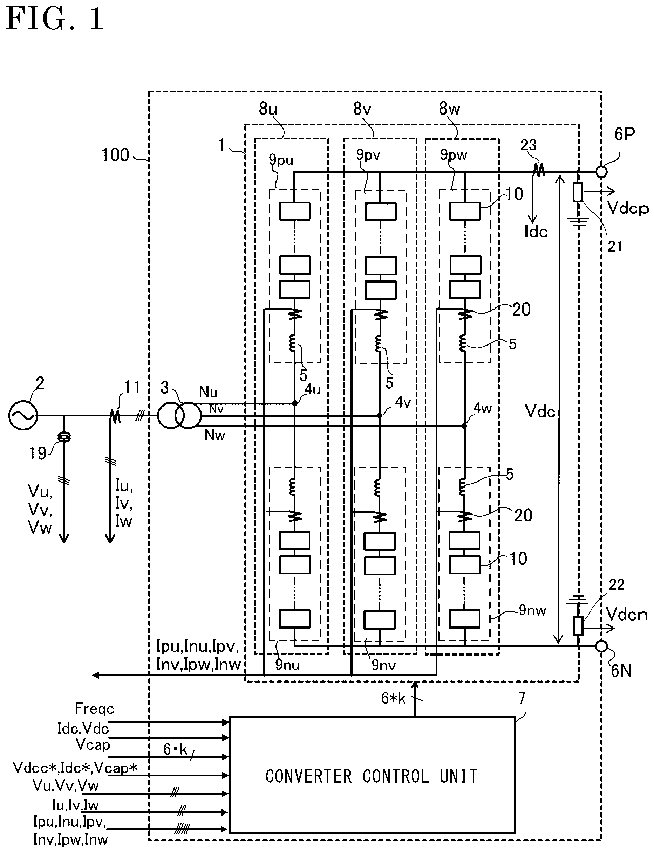

FIG. 1 schematically shows a configuration of an entire power conversion system including the power conversion device according to embodiment 1. A power conversion device 100 is connected between a three-phase AC power grid 2 and DC lines 6P, 6N.

The power conversion device 100 includes a power conversion unit 1 and a converter control unit 7.

The power conversion unit 1 has arms 9pu, 9pv, 9pw, 9nu, 9nv, 9nw, between AC ends Nu, Nv, Nw connected to an interconnection transformer 3 and a positive-side DC line 6P, and between the AC ends Nu, Nv, Nw and a negative-side DC line 6N, for U phase, V phase, and W phase, respectively. Hereinafter, when the arms are collectively mentioned, they are referred to as arms 9. In addition, for the respective phases, the arms 9pu, 9pv, 9pw connected between the AC ends Nu, Nv, Nw and the DC line 6P may be referred to as "positive-side arms", and the arms 9nu, 9nv, 9nw connected between the AC ends Nu, Nv, Nw and the DC line 6N may be referred to as "negative-side arms". The arm 9pu and the arm 9nu are connected via a connection point 4u, to form a U-phase leg circuit 8u, the arm 9pv and arm 9nv are connected via a connection point 4v, to form a V-phase leg circuit 8v, and the arm 9pw and the arm 9nw are connected via a connection point 4w, to form a W-phase leg circuit 8w.

Each arm 9 is composed of k converter cells 10 (k is a natural number equal to or greater than 2).

In the present embodiment, the power conversion unit 1 forms a three-phase Y-connection MMC.

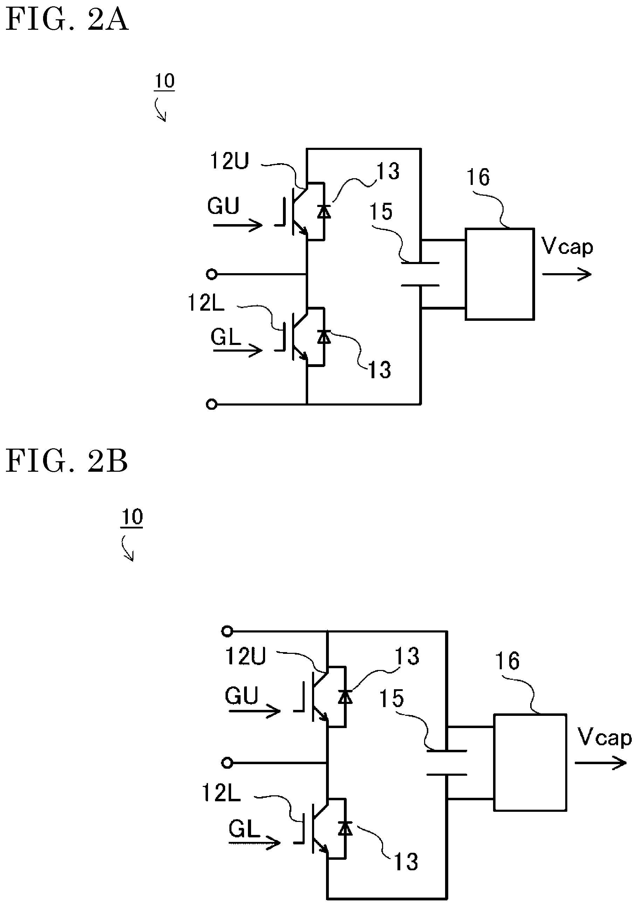

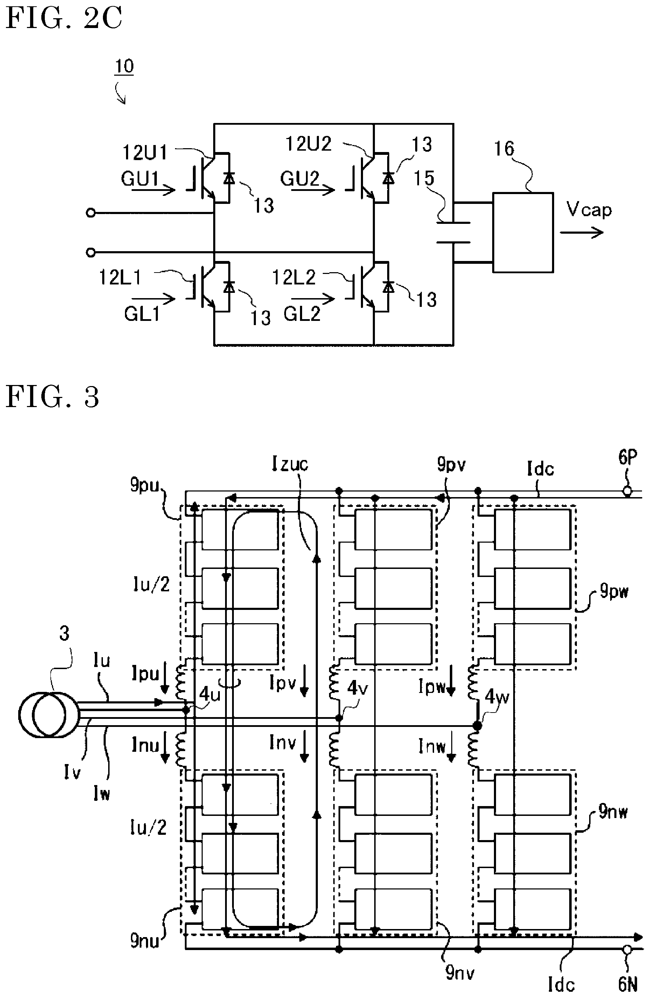

FIG. 2A, FIG. 2B, and FIG. 2C show configuration examples of the converter cell 10. As shown in FIG. 2A and FIG. 2B, the converter cell 10 is configured such that a capacitor 15 is connected in parallel to a series unit of self-turn-off switching elements 12U, 12L, and diode elements 13 are connected in antiparallel (in parallel and in reverse bias direction) to the switching elements 12U, 12L. Here, the self-turn-off semiconductor switching elements are insulated-gate bipolar transistors (IGBT) or metal oxide semiconductor field effect transistors (MOSFET), for example.

As shown in FIG. 2C, the converter cell 10 may have a full-bridge configuration in which two series units of semiconductor switching elements 12U, 12L to which diode elements 13 are connected in antiparallel, and a capacitor 15, are connected in parallel.

Gate signals GU, GL are transmitted to gates of the semiconductor switching elements 12U, 12L from a gate signal generation unit 90 described later.

The converter cell 10 includes a capacitor voltage detection unit 16 for detecting voltage of the capacitor 15, thus detecting capacitor voltage Vcap.

The power conversion unit 1 further includes reactors 5 and arm current detection units 20 provided correspondingly to the respective arms 9, a DC voltage detection unit 21 provided to the positive-side DC line 6P, and a DC voltage detection unit 22 provided to the negative-side DC line 6N, in addition to the capacitor voltage detection units 16 provided to the respective converter cells 10.

The arm current detection units 20 detect arm currents Ipu, Inu passing through the positive-side arm 9pu and the negative-side arm 9nu for U phase, arm currents Ipv, Inv passing through the positive-side arm 9pv and the negative-side arm 9nv for V phase, and arm currents Ipw, Inw passing through the positive-side arm 9pw and the negative-side arm 9nw for W phase.

The DC voltage detection unit 21 detects DC voltage Vdcp between the positive-side DC line 6P and the ground. The DC voltage detection unit 22 detects DC voltage Vdcn between the negative-side DC line 6N and the ground.

Here, DC voltage Vdcc is represented by Expression (1).

$$Vdcc = (Vdcp - Vdcn)/2$$

$$= Vdc/2 \qquad \ldots (1)$$

As a voltage command value for the DC voltage Vdcc to be applied to each arm 9 of the power conversion device 100, a DC voltage command value Vdcc* is determined in advance.

An AC voltage detection unit 19 and an output current detection unit (AC current detection unit) 11 are provided to the AC power grid 2. Three-phase AC grid voltages Vu, Vv, Vw detected by the AC voltage detection unit 19 and three-phase AC grid currents Iu, Iv, Iw of the AC power grid 2 detected by the output current detection unit 11 are inputted to the power conversion device 100.

<Currents flowing in power conversion device 100>

Here, currents flowing in the power conversion device 100 will be described with reference to FIG. 3.

In FIG. 3, the respective currents are as follows.

(a) Ipu, Ipv, Ipw: currents flowing through the U-phase positive-side arm 9pu, the V-phase positive-side arm 9pv, and the W-phase positive-side arm 9pw.
(b) Inu, Inv, Inw: currents flowing through the U-phase negative-side arm 9nu, the V-phase negative-side arm 9nv, and the W-phase negative-side arm 9nw.
(c) Iu: AC current for U phase flowing through the AC grid. Halves of the AC grid current Iu divisionally flow into the U-phase positive-side arm 9pu and the U-phase negative-side arm 9nu.
(d) Iv: AC current for V phase flowing through the AC grid. Halves of the AC grid current Iv divisionally flow into the V-phase positive-side arm 9pv and the V-phase negative-side arm 9nv.
(e) Iw: AC current for W phase flowing through the AC grid. Halves of the AC grid current Iw divisionally flow into the W-phase positive-side arm 9pw and the W-phase negative-side arm 9nw.
(f) Idc: current flowing through a DC grid and detected by the current sensor 23. One-third of Idc flows into each of the U-phase arm, the V-phase arm, and the W-phase arm.
(g) Izu: a current component obtained by excluding AC grid current Iu/2 flowing through the AC grid from the currents Ipu, Inu flowing through the U-phase arm. Relationships represented by the following Expressions (2) and (3) are satisfied.

$$Izu = Ipu + Iu/2 \quad \ldots (2)$$

$$Izu = Inu - Iu/2 \quad \ldots (3)$$

(h) Izuc: a circulation current component circulating among the leg circuits 8u, 8v, 8w for the respective phases without flowing through the AC grid and the DC grid. When the AC grid current Iu is eliminated from the above Expressions (2) and (3), the current component Izu is represented by the following Expression (4).

$$Izu = (Ipu + Inu)/2 \quad \ldots (4)$$

Thus, the circulation current component Izuc is represented by the following Expression (5).

$$Izuc = Izu - Idc/3 \quad \ldots (5)$$

Similarly, although not shown, currents for the other phases are as follows.

(i) Izv: a current component obtained by excluding AC grid current Iv/2 flowing through the AC power grid from the currents Ipv, Inv flowing through the V-phase arm.
(j) Izw: a current component obtained by excluding AC grid current Iw/2 flowing through the AC power grid from the currents Ipw, Inw flowing through the W-phase arm.
(k) Circulation current components Izvc, Izwc are represented by the following Expressions (6) and (7).

$$Izvc = Izv - Idc/3 \quad \ldots (6)$$

$$Izwc = Izw - Idc/3 \quad ... \quad (7)$$

<Configuration of converter control unit 7>

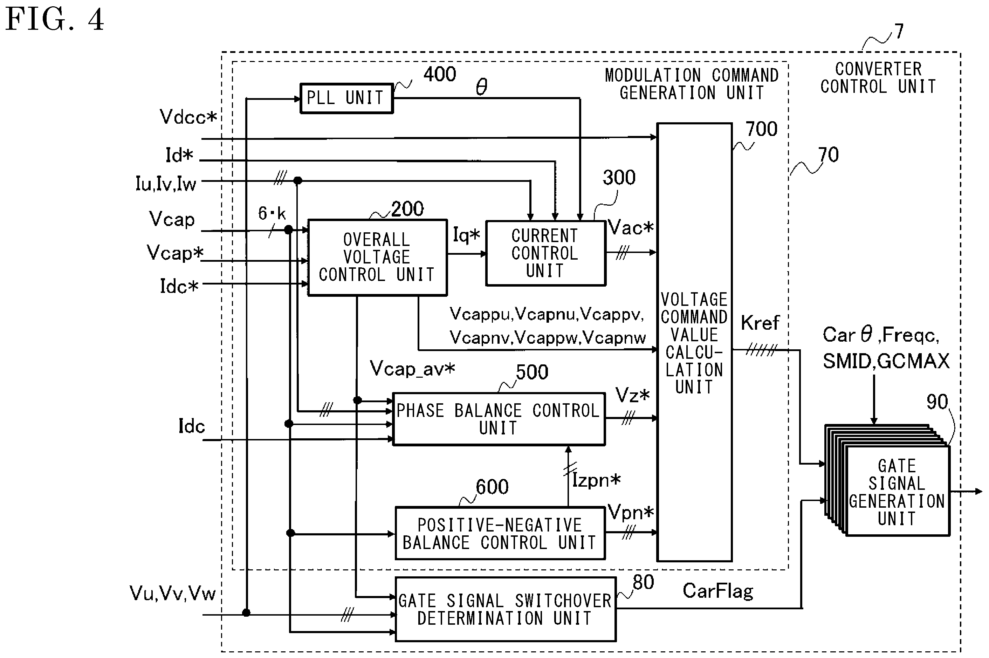

Next, a configuration of the converter control unit 7 will be described with reference to FIG. 4.

FIG. 4 is a function block diagram showing the configuration of the converter control unit 7. The converter control unit 7 is roughly composed of a modulation command generation unit 70, a gate signal switchover determination unit 80, and a gate signal generation unit 90.

<Configuration of modulation command generation unit 70>

First, the modulation command generation unit 70 will be described.

The modulation command generation unit 70 includes a phase locked loop (PLL) unit 400, an overall voltage control unit 200, a current control unit 300, a phase balance control unit 500 for balancing the capacitor voltages Vcap of the converter cells 10, a positive-negative balance control unit 600, and a voltage command value calculation unit 700.

<Operation of PLL unit 400>

The PLL unit 400 extracts a phase θ synchronized with grid voltage from the AC grid voltages Vu, Vv, Vw for the respective phases.

<Configuration of overall voltage control unit 200>

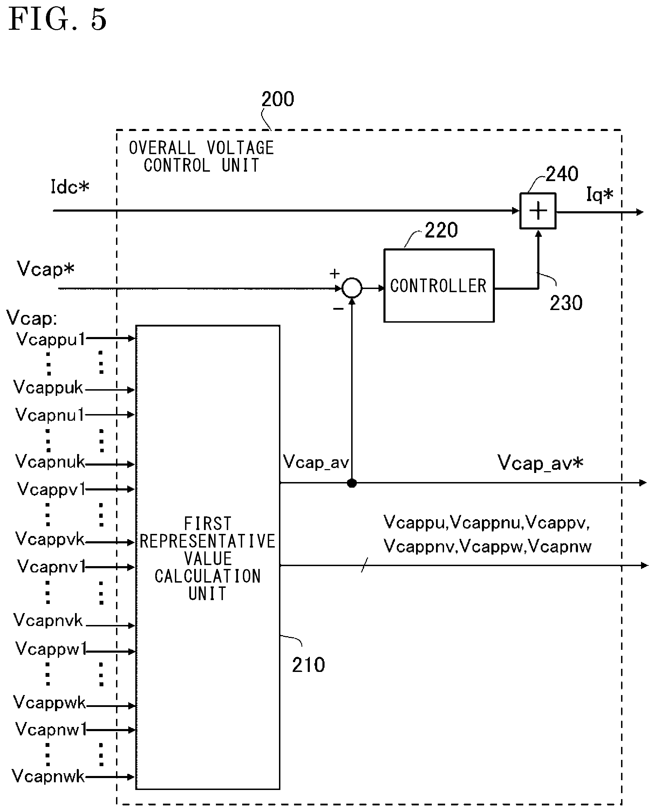

FIG. 5 is a block diagram showing a configuration of the overall voltage control unit 200. The overall voltage control unit 200 receives the capacitor voltages Vcap of all the converter cells 10 (in all arms for all phases), a capacitor voltage command value Vcap* (hereinafter, referred to as overall voltage command value Vcap*) for all the converter cells 10, and a DC current command value Idc*.

A representative value for the capacitor voltage values of all the converter cells 10 is denoted by Vcap, as shown in FIG. 2A, FIG. 2B, and FIG. 2C. In a case of mentioning individual values, as shown in FIG. 5, capacitor voltages in the U-phase positive-side arm may be denoted by Vcappu1 ... Vcappuk, capacitor voltages in the U-phase negative-side arm are denoted by Vcapnu1 ... Vcapnuk, capacitor voltages in the V-phase positive-side arm are denoted by Vcappv1 ... Vcappvk, capacitor voltages in the V-phase negative-side arm are denoted by Vcapnv1 ... Vcapnvk, capacitor voltages in the W-phase positive-side arm are denoted by Vcappw1 ... Vcappwk, and capacitor voltages in the U-phase negative-side arm are denoted by Vcapnw1 ... Vcapnwk. Each individual value may be denoted by Vcapxxm (xx = pu, nu, pv, nv, pw, nw; m is a natural number from 1 to k).

In FIG. 5, a first representative value calculation unit 210 of the overall voltage control unit 200 calculates a value Vcap_av of the average value of the capacitor voltages Vcap of all the converter cells 10.

Then, the overall voltage control unit 200 performs control so that the value Vcap_av of the average value of the capacitor voltages Vcap of all the converter cells 10 follows a predetermined overall voltage command value Vcap*. The value Vcap_av of the average value of the capacitor voltages Vcap of all the converter cells 10 may be a value that has passed through a filter for suppressing sharp change.

The value Vcap_av of the average value of the capacitor voltages Vcap is not limited to the average value of the capacitor voltages Vcap of all the converter cells 10. For example, the value Vcap_av may be a median value, an intermediate value between the maximum value and the minimum value, or the average value of the capacitor voltages Vcap of any number of converter cells 10.

Since a difference between AC power and DC power in the power conversion unit 1 is common active power among all the converter cells 10, the capacitor voltages Vcap of all the converter cells 10 are controlled by active current Iq. That is, feedback control is performed by a controller 220 such as a proportional integral (PI) controller so that a difference between the value Vcap_av of the average value of the capacitor voltages Vcap of all the converter cells 10 and the overall voltage command value Vcap* becomes zero. Then, to a controlled variable 230 that has undergone feedback, the DC current command value Idc* or a value obtained by filtering the DC current detection value Idc detected by the current sensor 23 is added by an adder 240, and the controlled variable after the addition is outputted as an active current command value Iq* to the current control unit 300.

The value Vcap_av of the average value calculated by the first representative value calculation unit 210 of the overall voltage control unit 200 is the average value of the capacitor voltages for all phases, and is used as a voltage command value in the phase balance control unit 500 for balancing voltages among the phases. Therefore, the value Vcap_av of the average value is explicitly outputted as a voltage command value Vcap_av* to the phase balance control unit 500 and the gate signal switchover determination unit 80.

In addition, the sums (Vcappu, Vcapnu, Vcappv, Vcapnv, Vcappw, Vcapnw) of the capacitor voltages Vcap in the respective arms are outputted to the voltage command value calculation unit 700. Here, when the sums of the capacitor voltages Vcap are collectively mentioned, they are denoted by Vcapxx.

<Configuration of current control unit 300>

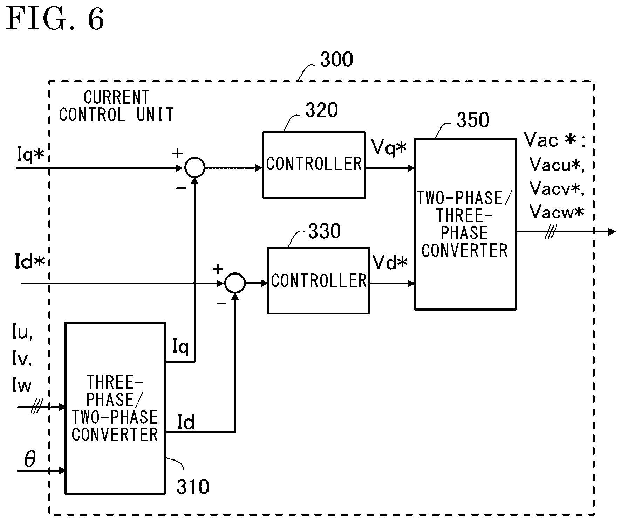

FIG. 6 is a block diagram showing a configuration of the current control unit 300. The current control unit 300 receives the phase θ outputted by the PLL unit 400 and synchronized with AC grid voltage, the AC grid currents Iu, Iv, Iw detected by the output current detection unit 11, the active current command value Iq* outputted from the overall voltage control unit 200, and a reactive current command value Id* determined from an operation condition of the power conversion unit 1.

The current control unit 300 controls active current Iq and reactive current Id of the power conversion unit 1, thereby performing power control for the power conversion unit 1.

The active current Iq and the reactive current Id of the power conversion unit 1 are calculated by a three-phase/two-phase converter 310 performing three-phase/two-phase conversion on the basis of the AC grid currents Iu, Iv, Iw and the phase θ synchronized with the AC grid voltage, as shown by the following Expression (8).

[Mathematical 1]

$$\begin{bmatrix} Id \\ Iq \end{bmatrix} = \frac{2}{3} \begin{bmatrix} \cos(\theta) & \cos(\theta-2\pi/3) & \cos(\theta-4\pi/3) \\ -\sin(\theta) & -\sin(\theta-2\pi/3) & -\sin(\theta-4\pi/3) \end{bmatrix} \begin{bmatrix} Iu \\ Iv \\ Iw \end{bmatrix} \quad \cdots (8)$$

Controllers 320, 330 perform feedback control so that the active current Iq follows the active current command value Iq* and the reactive current Id follows the reactive current command value Id*, to calculate voltage command values Vd*, Vq* on d and q axes. Here, the controllers 320, 330 are PI controllers or the like, as with the controller 220.

Next, the voltage command values Vd*, Vq* on d and q axes are inputted to a two-phase/three-phase converter 350, and thus are converted to AC voltage command values Vacu*, Vacv*, Vacw* for U phase, V phase, and W phase, as shown by the following Expression (9). The AC voltage command values Vacu*, Vacv*, Vacw* are outputted to the voltage command value calculation unit 700. When the AC voltage command values Vacu*, Vacv*, Vacw* are collectively mentioned, they are referred to as AC voltage command values Vac*.

[Mathematical 2]

$$\begin{bmatrix} Vacu* \\ Vacv* \\ Vacw* \end{bmatrix} = \begin{bmatrix} 1 & 0 \\ -1/2 & \sqrt{3}/2 \\ -1/2 & -\sqrt{3}/2 \end{bmatrix} \begin{bmatrix} \cos(\theta) & -\sin(\theta) \\ \sin(\theta) & \cos(\theta) \end{bmatrix} \begin{bmatrix} Vd* \\ Vq* \end{bmatrix}$$

$$\cdots (9)$$

<Configuration of phase balance control unit 500>

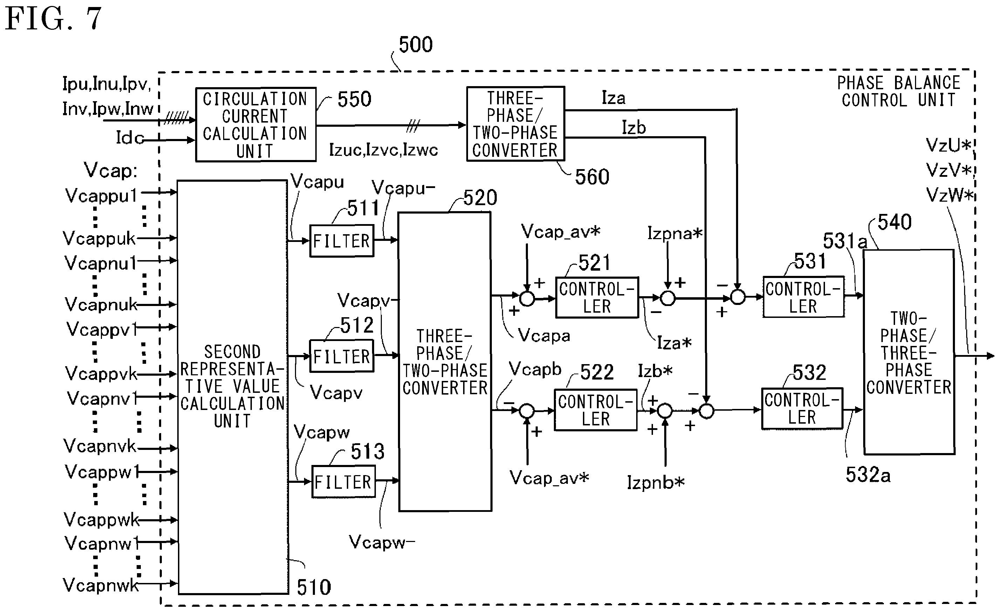

FIG. 7 is a block diagram showing a configuration of the phase balance control unit 500. The phase balance control unit 500 performs control so as to equalize voltages for the respective phases (U phase, V phase, W phase).

The phase balance control unit 500 receives the capacitor voltages Vcap of all the converter cells 10, the arm currents Ipu, Inu, Ipv, Inv, Ipw, Inw detected by the arm current detection unit 20, the DC current Idc detected by the current sensor 23, the value (first representative value) Vcap_av* of the average value of all the capacitor voltages outputted from the overall voltage control unit 200, and circulation current command values Izpn* (Izpna*, Izpnb) for positive-negative balance outputted from the positive-negative balance control unit 600 described later.

The phase balance control unit 500 performs control so that values Vcapu, Vcapv, Vcapw of average values of the capacitor voltages for the respective phases (U phase, V phase, W phase) follow the value Vcap_av* of the average value of all the capacitor voltages outputted from the overall voltage control unit 200.

A second representative value calculation unit 510 receives the capacitor voltages Vcap of all the converter cells 10, and calculates the values Vcapu, Vcapv, Vcapw of average values of the capacitor voltages of all the converter cells 10 in the leg circuits 8u, 8v, 8w for the respective phases (U phase, V phase, W phase).

The values Vcapu, Vcapv, Vcapw of average values of the capacitor voltages for the respective phases oscillate at a frequency that is two times the grid frequency, and therefore frequency components that are two times the grid frequency are removed from the values Vcapu, Vcapv, Vcapw of average values of the capacitor voltages by filters 511, 512, 513. As the filters 511, 512, 513, a moving average filter or a notch filter for the frequency that is two times the grid frequency is applied, for example.

Next, values obtained by filtering the values Vcapu, Vcapv, Vcapw of average values of the capacitor voltages for the respective values through the filters 511, 512, 513 are referred to as Vcapu-, Vcapv-, Vcapw-, and the values Vcapu-, Vcapv-, Vcapw- are subjected to three-phase/two-phase conversion by a three-phase/two-phase converter 520 on the basis of the following Expression (10), thus calculating control values Vcapa, Vcapb.

[Mathematical 3]

$$\begin{pmatrix} Vcapa \\ Vcapb \end{pmatrix} = \begin{pmatrix} 1 & -1/2 & -1/2 \\ 0 & \sqrt{3}/2 & -\sqrt{3}/2 \end{pmatrix} \begin{pmatrix} Vcapu- \\ Vcapv- \\ Vcapw- \end{pmatrix} \quad \cdots (10)$$

Next, controllers 521, 522 perform control so that deviations between the control values Vcapa, Vcapb and the value Vcap_av* of the average value of all the capacitor voltages outputted from the overall voltage control unit 200 become zero, thus calculating circulation current command values Iza*, Izb* for phase balance. As the controllers 521, 522, PI controllers are used, for example.

Next, the circulation current command values Iza*, Izb* for phase balance and the circulation current command values Izpna*, Izpnb* for positive-negative balance outputted from the positive-negative balance control unit 600 described later are respectively added.

Meanwhile, a circulation current calculation unit 550 of the phase balance control unit 500 receives the arm currents Ipu, Inu, Ipv, Inv, Ipw, Inw and the DC current Idc, and calculates the circulation currents Izuc, Izvc, Izwc, using the above Expressions (5) to (7). The circulation currents Izuc, Izvc, Izwc calculated by the circulation current calculation unit 550 are inputted to a three-phase/two-phase converter 560, and thus are subjected to three-phase/two-phase conversion on the basis of the following Expression (11), so that control values Iza, Izb are outputted.

[Mathematical 4]

$$\begin{pmatrix} Iza \\ Izb \end{pmatrix} = \begin{pmatrix} 1 & -1/2 & -1/2 \\ 0 & \sqrt{3}/2 & -\sqrt{3}/2 \end{pmatrix} \begin{pmatrix} Izuc \\ Izvc \\ Izwc \end{pmatrix} \quad \cdots (11)$$

Controllers 531, 532 perform control so that deviations between the control values Iza, Izb outputted from the three-phase/two-phase converter 560 and the values obtained by adding the circulation current command values Iza*, Izb* for phase balance and the circulation current command values Izpna*, Izpnb* for positive-negative balance, become zero, whereby output values 531a, 532a are outputted. Here, as the controllers 531, 532, PI controllers are used, for example.

Then, the output values 531a, 532a are inputted to a two-phase/three-phase converter 540, and thus are converted to voltage command values VzU*, VzV*, VzW* for circulation current. The voltage command values VzU*, VzV*, VzW* for circulation current are outputted to the voltage command value calculation unit 700 at a subsequent stage. Here, when the voltage command values VzU*, VzV*, VzW* for circulation current are collectively mentioned, they are referred to as voltage command values Vz* (see FIG. 4).

<Configuration of positive-negative balance control unit 600>

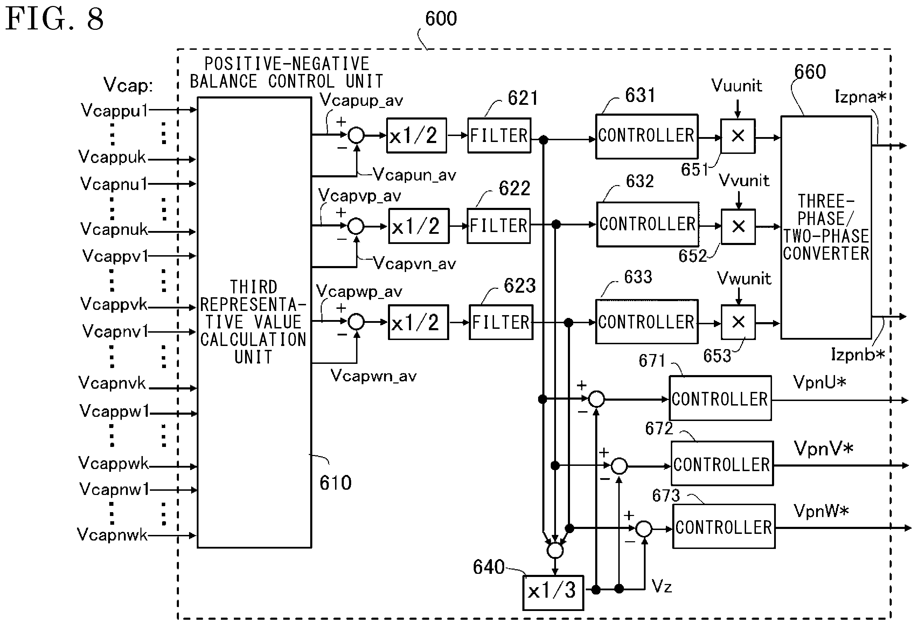

FIG. 8 is a block diagram showing a configuration of the positive-negative balance control unit 600. The positive-negative balance control unit 600 performs control so as to equalize voltages in the positive-side arm and the negative-side arm.

The positive-negative balance control unit 600 receives the capacitor voltages Vcap of all the converter cells 10. The positive-negative balance control unit 600 performs control so that the capacitor voltages in the positive-side arm and the capacitor voltages in the negative-side arm are balanced in each of the leg circuits 8u, 8v, 8w for the respective phases (U phase, V phase, W phase).

A third representative value calculation unit 610 receives the capacitor voltage values Vcap of all the converter cells 10, and calculates values Vcapup_av, Vcapun_av, Vcapvp_av, Vcapvn_av, Vcapwp_av, Vcapwn_av of average values of capacitor voltages of the converter cells 10 in the positive-side arms and the negative-side arms for the respective phases (U phase, V phase, W phase). Then, control is performed so that, for the respective phases, differences between the values Vcapup_av, Vcapvp_av, Vcapwp_av of average values of the capacitor voltages in the positive-side arms and the values Vcapun_av, Vcapvn_av, Vcapwn_av of average values of the capacitor voltages in the negative-side arms, become zero.

Specifically, as shown in FIG. 8, the values of the differences between the values Vcapup_av, Vcapvp_av, Vcapwp_av of average values of the capacitor voltages in the positive-side arms and the values Vcapun_av, Vcapvn_av, Vcapwn_av of average values of the capacitor voltages in the negative-side arms, calculated by the third representative value calculation unit 610, are multiplied by 1/2 at multipliers, and the multiplied values are filtered through filters 621, 622, 623. In the values of average values of the capacitor voltages in the arm on one side (one of the positive-side and negative side arms) calculated by the third representative value calculation unit 610, there are oscillation with the same frequency as the grid frequency and oscillation with a frequency that is two times the grid frequency. Therefore, in the filters 621, 622, 623, the above values are filtered through moving average filters for the same frequency as the grid frequency, or through notch filters for the same frequency as the grid frequency and notch filters for a frequency that is two times the grid frequency.

Then, the values (referred to as positive-negative balance outputs for the respective phases) obtained through the filters 621, 622, 623 are subjected to, for example, PI control by controllers 631, 632, 633, and the resultant values are outputted. Thus, the magnitudes of currents needed for equalizing voltages in the positive-side arm and voltages in the negative-side arm for each phase are outputted.

Here, in order to eliminate imbalance of the capacitor voltages between the positive-side arm and the negative-side arm, the direction (current charging/discharging direction) of power flowing into the capacitors needs to be reversed between the positive-side arm and the negative-side arm. Since the AC voltages inputted/outputted to/from the power conversion unit 1 have opposite polarities between the positive-side arm and the negative-side arm, 1f-component (fundamental-component) currents having the same polarity need to flow in order to charge/discharge the capacitors between the positive-side arm and the negative-side arm.

That is, the output values from the controllers 631, 632, 633 which are the magnitudes of currents needed for equalizing voltages in the positive-side arm and voltages in the negative-side arm for each phase are multiplied by unit sine waves Vuunit, Vvunit, Vwunit having a magnitude of 1 and the same phases as AC voltages for the respective phases, at multipliers 651, 652, 653, thus calculating 1f-component (fundamental-component) AC currents for the respective phases for eliminating imbalance of the capacitor voltages of the positive-side arm and the negative-side arm. The 1f-component (fundamental-component) AC currents for the respective phases are inputted to a three-phase/two-phase converter 660, and thus are subjected to three-phase/two-phase conversion, whereby the circulation current command values Izpna*, Izpnb* for positive-negative balance are outputted.

Meanwhile, using the values (referred to as positive-negative balance outputs for the respective phases) obtained through the filters 621, 622, 623, controllers 671, 672, 673 output AC voltage commands VpnU*, VpnV*, VpnW* for positive-negative balance.

Specifically, the sum of the values (positive-negative balance outputs for the respective phases) obtained through the filters 621, 622, 623 is multiplied by 1/3 at a multiplier 640, thus calculating neutral point voltage Vz. Then, differences between the neutral point voltage Vz and the positive-negative balance outputs for the respective phases are subjected to, for example, PI control by the controllers 671, 672, 673, whereby the AC voltage command values VpnU*, VpnV*, VpnW* for positive-negative balance are outputted. Here, when the AC voltage command values VpnU*, VpnV*, VpnW* for positive-negative balance are collectively mentioned, they are referred to as AC voltage command values Vpn* for positive-negative balance (see FIG. 4).

The positive-negative balance control unit 600 outputs AC components for the respective phases as the circulation current command values Izpn* (Izpna*, Izpnb*), and DC components for the respective phases as the AC voltage command values Vpn* (VpnU*, VpnV*, VpnW*).

<Operation of voltage command value calculation unit 700>

The voltage command value calculation unit 700 receives the predetermined DC voltage command value Vdcc*, the AC voltage command values Vac* (Vacu*, Vacv*, Vacw*) for the respective phases outputted from the current control unit 300, the voltage command values Vz* (VzU*, VzV*, VzW*) for circulation current outputted from the phase balance control unit 500, the AC voltage command values Vpn* for positive-negative balance outputted from the positive-negative balance control unit 600, and the sums Vcappu, Vcapnu, Vcappv, Vcapnv, Vcappw, Vcapnw of the voltages of the capacitors 15 included in the respective arms outputted from the overall voltage control unit 200. Then, the voltage command value calculation unit 700 calculates voltage command values Vref for the respective arms by the following Expression (12). Here, the DC voltage command value Vdcc* is a voltage command value corresponding to 1/2 times the voltage Vdc between the DC terminals.

That is, voltage command values Vrefpu, Vrefpv, Vrefpw, Vrefnu, Vrefnv, Vrefnw for the U-phase positive-side arm, the V-phase positive-side arm, the W-phase positive-side arm, the U-phase negative-side arm, the V-phase negative-side arm, and the W-phase negative-side arm, are calculated by the following Expression (12).

$$Vrefpu = Vdcc* + VzU* - Vacu* - VpnU*$$

$$Vrefpv = Vdcc* + VzV* - Vacv* - VpnV*$$

$$Vrefpw = Vdcc* + VzW* - Vacw* - VpnW*$$

$$Vrefnu = Vdcc* + VzU* + Vacu* + VpnU*$$

$$Vrefnv = Vdcc* + VzV* + Vacv* + VpnV*$$

$$Vrefnw = Vdcc* + VzW* + Vacw* + VpnW*$$

$$\ldots \text{Expression (12)}$$

The voltage command values Vrefpu, Vrefpv, Vrefpw, Vrefnu, Vrefnv, Vrefnw for the U-phase positive-side arm, the V-phase positive-side arm, the W-phase positive-side arm, the U-phase negative-side arm, the V-phase negative-side arm, and the W-phase negative-side arm calculated by Expression (12), are divided by the sums Vcappu, Vcapnu, Vcappv, Vcapnv, Vcappw, Vcapnw of the voltages of the capacitors 15 included in the respective arms, whereby arm modulation commands Krefpu, Krefpv, Krefpw, Krefnu, Krefnv, Krefnw for the U-phase positive-side arm, the V-phase positive-side arm, the W-phase positive-side arm, the U-phase negative-side arm, the V-phase negative-side arm, and the W-phase negative-side arm, are generated. When the arm modulation commands are collectively mentioned, they are referred to as arm modulation commands Kref.

The modulation command generation unit 70 outputs the arm modulation commands Kref (Krefpu, Krefpv, Krefpw, Krefnu, Krefnv, Krefnw) which are calculation results of the voltage command value calculation unit 700, to the gate signal generation unit 90. The gate signal generation unit 90 compares the arm modulation command Kref with a carrier wave, thereby determining gate signals GU, GL for the semiconductor switching elements of the converter cells 10.

<Configuration and operation of gate signal switchover determination unit 80>

Next, the gate signal switchover determination unit 80 according to the present embodiment 1 will be described. In a case where the capacitor voltage of at least one converter cell 10 has gone out of a prescribed range during steady operation of the power conversion device 100, the gate signal switchover determination unit 80 determines to switch operation so as to adjust the number of pulses in one carrier wave cycle, instead of generating gate signals with one pulse per one carrier wave cycle (hereinafter, referred to as **"1**-pulse/1-carrier wave cycle").

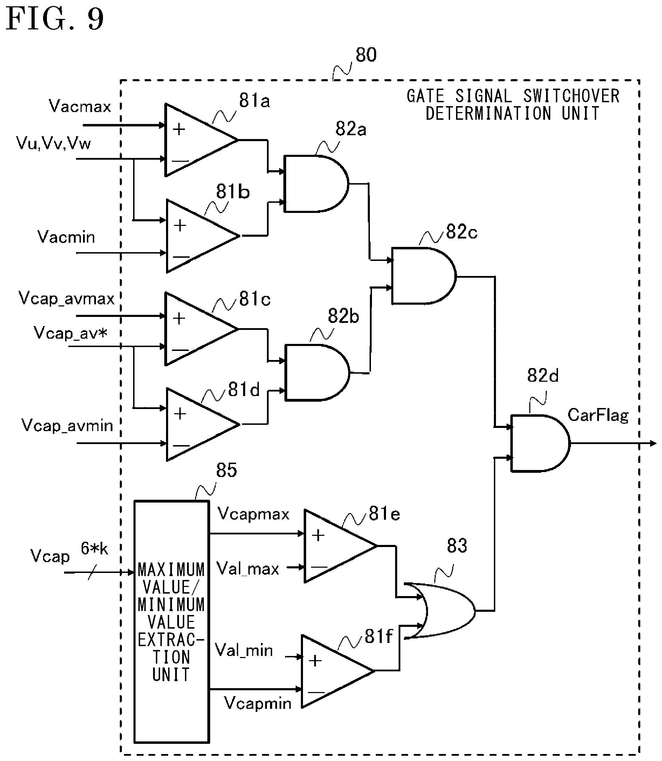

Hereinafter, a configuration and operation of the gate signal switchover determination unit 80 will be described with reference to the drawings. FIG. 9 is a block diagram showing the configuration of the gate signal switchover determination unit 80. The gate signal switchover determination unit 80 receives the AC grid voltages Vu, Vv, Vw detected by the AC voltage detection unit 19, the value Vcap_av* of average values of the capacitor voltages of all the converter cells 10 outputted from the overall voltage control unit 200, and the capacitor voltages Vcapxxm of all the converter cells 10.

The AC grid voltages Vu, Vv, Vw are compared with a predetermined grid voltage upper limit value Vacmax by a comparator 81a, and if the AC grid voltages Vu, Vv, Vw are smaller than the grid voltage upper limit value Vacmax, the comparator 81a outputs 1. In addition, the AC grid voltages Vu, Vv, Vw are compared with a predetermined grid voltage lower limit value Vacmin by a comparator 81b, and if the AC grid voltages Vu, Vv, Vw are equal to or greater than the grid voltage lower limit value Vacmin, the comparator 81b outputs 1. Therefore, if all the AC grid voltages Vu, Vv, Vw are in a range between the upper and lower limit values, a logical conjunction circuit (hereinafter, referred to as AND circuit) 82a outputs 1. Here, the grid voltage upper limit value Vacmax may be set at 1.1 pu, and the grid voltage lower limit value Vacmin may be set at 0.9 pu, for example, to determine whether the AC grid voltages Vu, Vv, Vw are in a steady range.

The value Vcap_av* of the average value of the capacitor voltages is compared with a predetermined capacitor voltage average value upper limit value Vcap_avmax by a comparator 81c, and if the value Vcap_av* is smaller than the predetermined capacitor voltage average value upper limit value Vcap_avmax, the comparator 81c outputs 1. In addition, the value Vcap_av* is compared with a capacitor voltage average value lower limit value Vcap_avmin by a comparator 81d, and if the value Vcap_av* of the average value of the capacitor voltages is equal to or greater than the capacitor voltage average value lower limit value Vcap_avmin, the comparator 81d outputs 1. Therefore, an AND circuit 82b outputs 1 when the value Vcap_av* of the average value of all the capacitor voltages is equal to or greater than the capacitor voltage average value lower limit value Vcap_avmin and is smaller than the capacitor voltage average value upper limit value Vcap_avmax. Here, the capacitor voltage average value upper limit value Vcap_avmax may be set at 1.05 pu, and the capacitor voltage average value lower limit value Vcap_avmin may be set at 0.95 pu, for example, to determine whether the value Vcap_av* of the average value of the capacitor voltages is in a steady range in which the power conversion device 100 can output desired voltage.

If both of the AC grid voltages Vu, Vv, Vw and the value Vcap_av* of the average value of the capacitor voltages are in the steady range, an AND circuit 82c outputs 1. That is, when the power conversion device 100 is performing steady operation, the AND circuit 82c outputs 1.

In addition, when the gate signal switchover determination unit 80 receives the capacitor voltages Vcap (Vcapxx1 to Vcapxxk) of all the converter cells, a maximum-value-and-minimum-value extraction unit 85 calculates a maximum value Vcapmax of the capacitor voltages of all the converter cells and a minimum value Vcapmin of the capacitor voltages of all the converter cells. In FIG. 9, the maximum-value-and-minimum-value extraction unit 85 is described as maximum value/minimum value extraction unit 85.

The capacitor voltage maximum value Vcapmax of all the converter cells is compared with an allowable maximum value Val_max (e.g., 1.2 pu) by a comparator 81e, and if the capacitor voltage maximum value Vcapmax is greater than the allowable maximum value Val_max, the comparator 81e outputs 1. Further, if the capacitor voltage minimum value Vcapmin is equal to or smaller than an allowable minimum value Val_min (e.g., 0.8 pu), a comparator 81f outputs 1. Outputs of the comparator 81e and the comparator 81f are inputted to a logical disjunction circuit (hereinafter, referred to as OR circuit) 83, and if at least one capacitor voltage is out of the allowable range, the OR circuit 83 outputs 1.

In a case where both of the AND circuit 82c and the OR circuit 83 output 1, an AND circuit 82d sets a gate switchover signal CarFlag at 1. That is, if at least one capacitor voltage has gone out of the allowable range in steady operation, the gate switchover signal CarFlag is set at 1.

<Configuration and operation of gate signal generation unit 90>

Next, the gate signal generation unit 90 will be described. The gate signal generation unit 90 selectively performs either restricting the number of pulses of the gate signal to one in one carrier wave cycle or adjusting the number of pulses of the gate signal to be equal to or smaller than an allowable value which is greater than one, in accordance with the value of the gate switchover signal CarFlag outputted by the gate signal switchover determination unit 80.

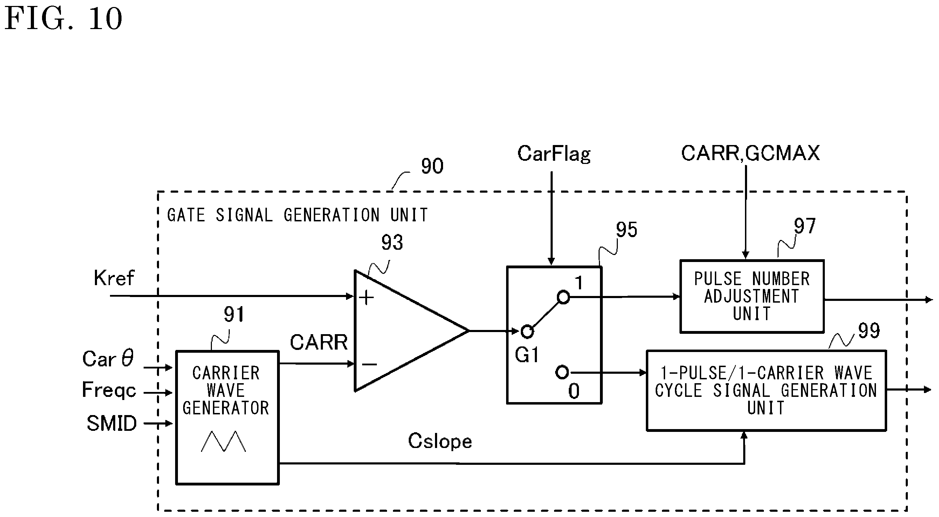

Hereinafter, a configuration and operation of the gate signal generation unit 90 will be described with reference to the drawings. FIG. 10 is a block diagram showing the configuration of the gate signal generation unit 90. A carrier wave generator 91 receives an initial value Carθ of a carrier wave phase, a carrier wave frequency Freqc, and a number SMID for identifying an individual converter cell, and generates a triangular carrier wave CARR corresponding to all the converter cells. In addition, the carrier wave generator 91 outputs Cslope which denotes the slope of the triangular carrier wave CARR, to a 1-pulse/1-carrier wave cycle signal generation unit 99. The 1-pulse/1-carrier wave cycle signal generation unit 99 is a signal generation unit that generates a gate signal having one rectangular wave (pulse) in one carrier wave cycle.

In the carrier wave generator 91, in a case where each arm has k converter cells 10, k triangular carrier waves are needed, and a phase difference φcr between adjacent two carrier waves is represented by Expression (13).

$$\varphi cr \ [rad.] = 2\pi/k \quad \dots \ (13)$$

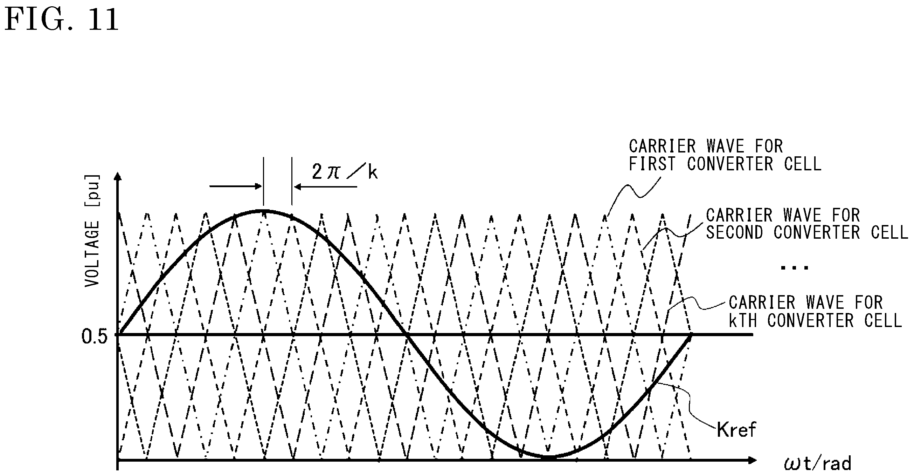

FIG. 11 shows the relationship between the arm modulation command Kref and carrier waves in a phase shift PWM method. In FIG. 11, a solid-line curve represents the arm modulation command Kref, and a dotted-dashed line, a short-broken line, and a long-broken line represent a carrier wave for the first converter cell, a carrier wave for the second converter cell, and a carrier wave for the kth converter cell, respectively. For example, where a phase of the carrier wave for the first converter cell in the U-phase positive-side arm is defined as Carθ, a phase of the carrier wave for the second converter cell is set at Carθ + 2π/k, a phase of the carrier wave for the third converter cell is set at Carθ + 2×2π/k, and the carrier waves thus generated are compared with the arm modulation command Kref.

In addition, the initial values Carθ of the phases of the carrier waves for the respective arms are set so as to be equally shifted from each other by 60 degrees among the arms, whereby all the switching elements in the circuit perform switching equally in the whole output fundamental cycle. That is,

where the initial value $Car\theta$ of the phase of the carrier wave for the U-phase positive-side arm is 0,
the initial value $Car\theta$ of the phase of the carrier wave for the V-phase positive-side arm is set at 60 degrees,
the initial value $Car\theta$ of the phase of the carrier wave for the W-phase positive-side arm is set at 120 degrees,
the initial value $Car\theta$ of the phase of the carrier wave for the U-phase negative-side arm is set at 180 degrees,
the initial value $Car\theta$ of the phase of the carrier wave for the V-phase negative-side arm is set at 240 degrees, and
the initial value $Car\theta$ of the phase of the carrier wave for the W-phase negative-side arm is set at 300 degrees.

Next, the magnitudes of the arm modulation command Kref and the carrier wave are compared for each converter cell by a comparator 93. If Kref - CARR is equal to or greater than 0, the comparator 93 outputs 1 to G1, and if Kref - CARR is smaller than 0, the comparator 93 outputs 0 to G1 of a selector 95.

Next, in accordance with the value of a gate switchover signal CarFlag outputted from the gate signal switchover determination unit 80, the selector 95 selects the 1-pulse/1-carrier wave cycle signal generation unit 99 or a pulse number adjustment unit 97, whereby the gate signals GU, GL for the switching elements 12U, 12L are determined.

If the gate switchover signal CarFlag is 0, i.e., if the capacitor voltages of all the converter cells are in the allowable range in steady operation, the 1-pulse/1-carrier wave cycle signal generation unit 99 is selected.

<Operation of 1-pulse/1-carrier wave cycle signal generation unit 99>

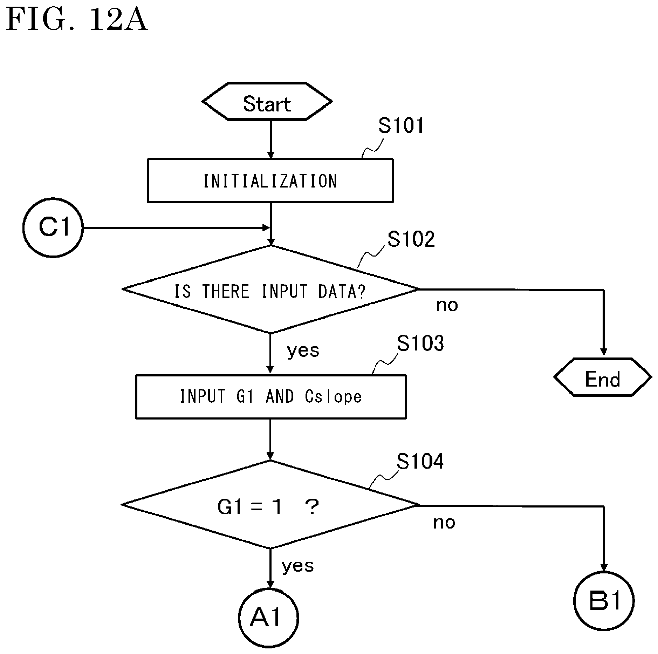

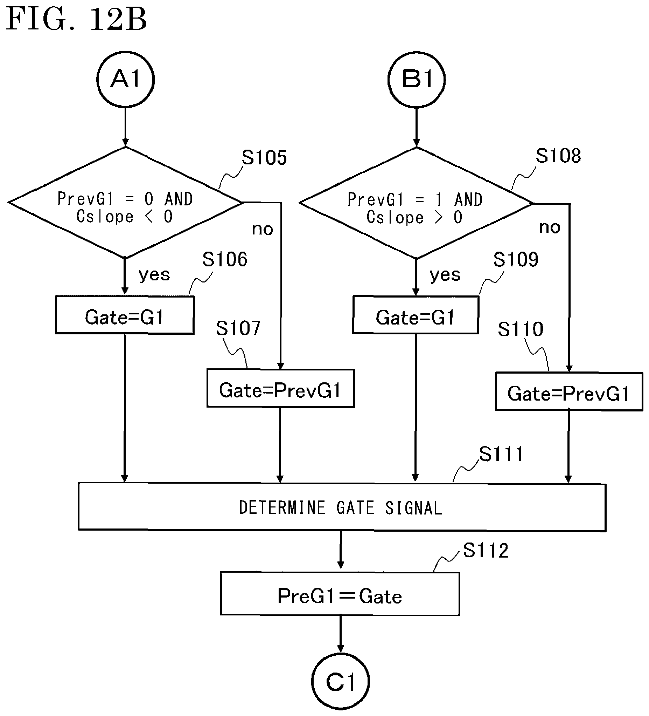

Hereinafter, operation of the 1-pulse/1-carrier wave cycle signal generation unit 99 will be described with reference to flowcharts in FIG. 12A and FIG. 12B. In embodiment 1, a carrier wave having a low frequency Freqc is used, and the low frequency Freqc is approximately a frequency lower than two times the grid frequency.

In step S101, PrevG1 is initialized at 0. PrevG1 is the value of G1 one analysis time ago.

In step S102, if there is input data, the process proceeds to step S103 (yes in step S102). If there is no input data, the process ends (no in step S102).

In step S103, G1 outputted from the comparator 93 and the slope Cslope of the carrier wave outputted from the carrier wave generator 91, are inputted.

In step S104, whether or not G1 is 1 is determined. If G1 is 1 (yes in step S104), the process proceeds to step S105.

In step S105, if PrevG1 is 0 and the slope Cslope of the carrier wave is negative (yes in step S105), the process proceeds to step S106.

In step S106, the value of G1 is set for the gate signal Gate, and the process proceeds to step S111.

In step S105, if PrevG1 is 1 or the slope Cslope of the carrier wave is positive (no in step S105), the process proceeds to step S107.

In step S107, the value of PrevG1 is set for the gate signal Gate. That is, the value of G1 one analysis time ago is kept, and the process proceeds to step S111.

In step S104, if G1 is 0 (no in step S104), the process proceeds to step S108.

In step S108, if PrevG1 is 1 and the slope Cslope of the carrier wave is positive (yes in step S108), the process proceeds to step S109.

In step S109, the value of G1 is set for the gate signal Gate, and the process proceeds to step S111.

In step S108, if PrevG1 is 0 or the slope Cslope of the carrier wave is negative (no in step S108), the process proceeds to step S110.

In step S110, the value of PrevG1 is set for the gate signal Gate. That is, the value of G1 one analysis time ago is kept, and the process proceeds to step S111.

In step S111, the gate signals GU, GL for the switching elements 12U, 12L are determined on the basis of the gate signal Gate. Specifically, in step S111, if the value of the gate signal Gate one analysis time ago is 0 and then the value has changed from 0 to 1, the gate signal GL for the switching element 12L is set to OFF and the gate signal GU of the switching element 12U is set to ON with delay of a dead time. On the other hand, in step S111, if the value of Gate one analysis time ago is 1 and then the value has changed from 1 to 0, the gate signal GU for the switching element 12U is set to OFF and the gate signal GL of the switching element 12L is set to ON with delay of a dead time. Thus, change of the gate signal Gate between 0 and 1 corresponds to switchover of the gate signals GU, GL for the switching elements 12U, 12L between ON and OFF.

Subsequently, the process proceeds to step S112, to set the present value of Gate for PrevG1.

While steps S102 to S112 are repeated, the gate signals GU, GL for the switching elements 12U, 12L are determined and switching of the switching elements 12U, 12L is performed.

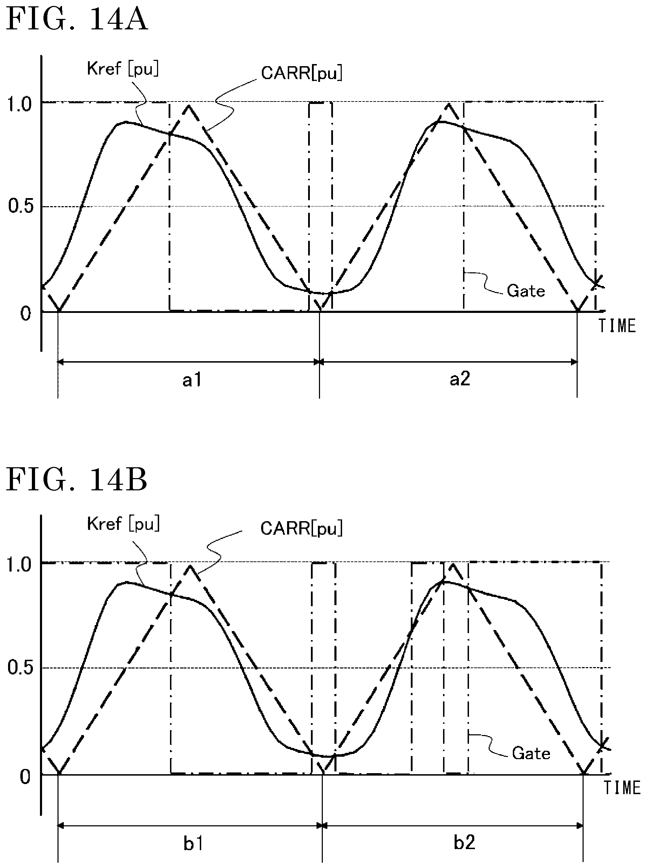

In a case where the gate switchover signal CarFlag is 0 and the 1-pulse/1-carrier wave cycle signal generation unit 99 is selected, **i.e.,** a case where the flowcharts in FIG. 12A and FIG. 12B are applied, the relationship among the arm modulation command Kref, the carrier wave CARR, and the gate signal Gate is shown in FIG. 14A. In FIG. 14A and FIG. 14B, a solid line represents the arm modulation command Kref, a broken line represents the carrier wave CARR, and a dotted-dashed line represents the gate signal Gate.

As shown in FIG. 14A, a part where the gate signal Gate changes from 0 to 1 or from 1 to 0 appears twice in each of cycles (region a1 and region a2) of the carrier wave CARR. That is, the power conversion device 100 operates with one pulse (one rectangular wave) in one cycle of the carrier wave CARR.

Therefore, in a case where the capacitor voltages Vcap of all the converter cells are in the allowable range, the number of times of switching of the gate signal is set at one per one cycle of the carrier wave, whereby operation can be performed with low switching loss.

<Operation of pulse number adjustment unit 97>

In the selector 95, in a case where the gate switchover signal CarFlag outputted from the gate signal switchover determination unit 80 is 1, **i.e.,** a case where the capacitor voltage of at least one converter cell 10 has gone out of the allowable range in steady operation, the pulse number adjustment unit 97 is selected.

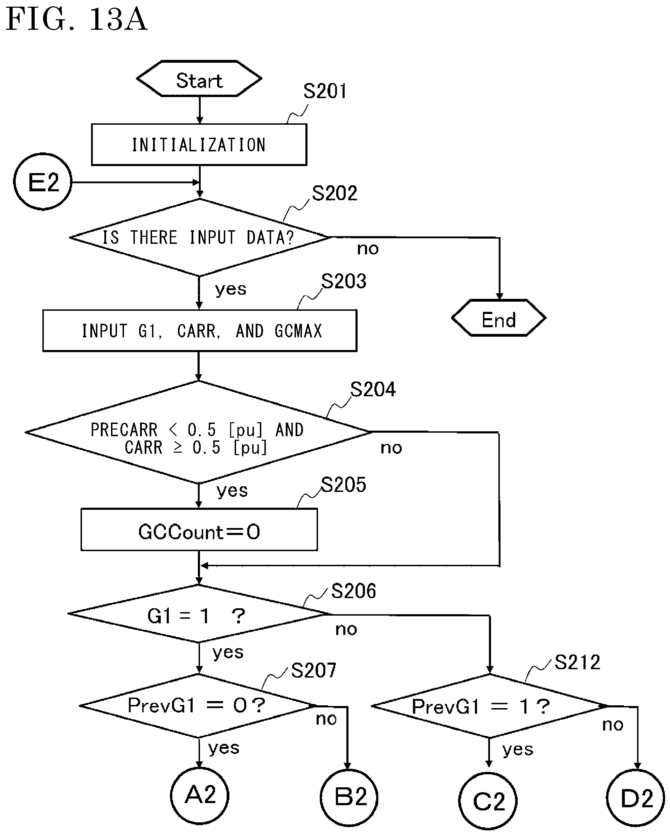

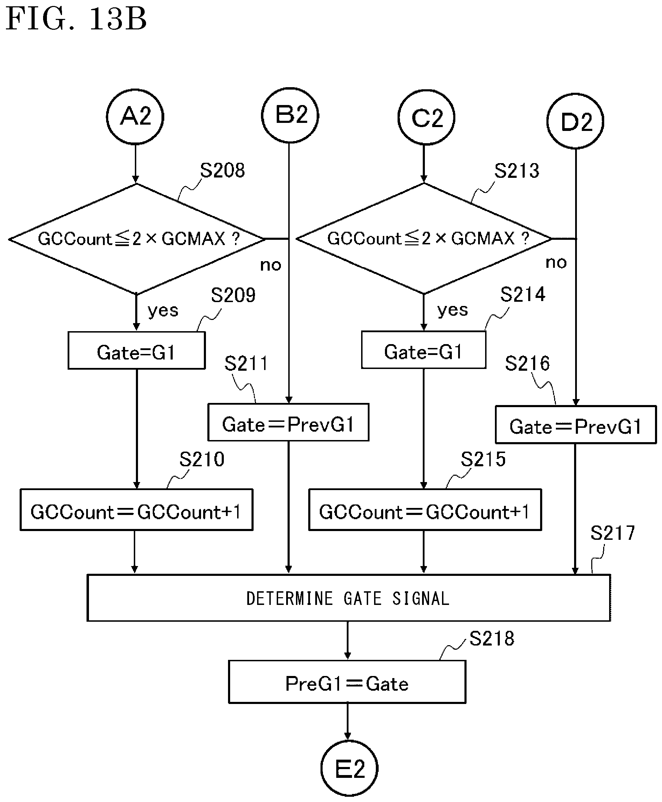

Hereinafter, operation of the pulse number adjustment unit 97 will be described with reference to flowcharts in FIG. 13A and FIG. 13B.

In step S201, PrevG1 is initialized at 0 and PRECARR is initialized at 0. PrevG1 is the value of G1 one analysis time ago. PRECARR is the value of the carrier wave CARR one analysis time ago.

In step S202, if there is input data, the process proceeds to step S203 (yes in step S202). If there is no input data, the process ends (no in step S202).

In step S203, G1 outputted from the comparator 93, the carrier wave CARR outputted from the carrier wave generator 91, and a predetermined gate pulse number upper limit value GCMAX are inputted.

In step S204, if the value PRECARR of the carrier wave one analysis time ago is smaller than 0.5 pu and then the carrier wave CARR has become equal to or greater than 0.5 pu (yes in step S204), i.e., immediately after the value of the carrier wave has passed 0.5 pu, the process proceeds to step S205, to initialize GCCount at 0. Here, GCCount is the number of times the gate signal Gate has changed. That is, when the gate signal Gate changes twice, one pulse is formed.

In a case of no in step S204, the process proceeds to step S206.

In step S206, whether or not G1 is 1 is determined. If G1 is 1 (yes in step S206), the process proceeds to step S207.

In step S207, whether or not PrevG1 is 0 is determined. If PrevG1 is 0 (yes in step S207), the process proceeds to step S208.

In step S208, if the number GCCount of times the gate signal Gate has changed is equal to or smaller than two times the gate pulse number upper limit value GCMAX (yes in step S208), the process proceeds to step S209.

In step S209, the value of G1 is set for the gate signal Gate, and the process proceeds to step S210.

In step S210, the number GCCount of times the gate signal Gate has changed is increased by 1, and the process proceeds to step S217.

In step S207, if PrevG1 is 1 (no in step S207), the process proceeds to step S211.

In step S211, the value of PrevG1 is set for the gate signal Gate. That is, the value of G1 one analysis time ago is kept, and the process proceeds to step S217.

In step S206, if G1 is 0 (no in step S206), the process proceeds to step S212.

In step S212, whether or not PrevG1 is 1 is determined. If PrevG1 is 1 (yes in step S212), the process proceeds to step S213.

In step S213, if the number GCCount of times Gate has changed is equal to or smaller than two times the gate pulse number upper limit value GCMAX (yes in step S213), the process proceeds to step S214.

In step S214, the value of G1 is set for the gate signal Gate, and the process proceeds to step S215.

In step S215, the number GCCount of times the gate signal Gate has changed is increased by 1, and the process proceeds to step S217.

In step S212, if PrevG1 is 0 (no in step S212), the process proceeds to step S216.

In step S216, the value of PrevG1 is set for the gate signal Gate. That is, the value of G1 one analysis time ago is kept, and the process proceeds to step S217.

In step S212, the gate signals GU, GL for the switching elements 12U, 12L are determined on the basis of the gate signal Gate. Specifically, in step S217, if the value of Gate one analysis time ago is 0 and then the value has changed from 0 to 1, the gate signal GL for the switching element 12L is set to OFF, and the gate signal GU for the switching element 12U is set to ON with delay of a dead time. On the other hand, in step S217, if the value of Gate one analysis time ago is 1 and then the value has changed from 1 to 0, the gate signal GU for the switching element 12U is set to OFF, and the gate signal GL for the switching element 12L is set to ON with delay of a dead time.

Subsequently, the process proceeds to step S218, to set the present value of Gate for PrevG1.

While steps S202 to S218 are repeated, the gate signals GU, GL for the switching elements 12U, 12L are determined, and switching of the switching elements 12U, 12L is performed.

In a case where the gate switchover signal CarFlag is 1 and the pulse number adjustment unit 97 is selected, **i.e.,** a case where the flowcharts in FIG. 13A and FIG. 13B are applied, the relationship among the arm modulation command Kref, the carrier wave CARR, and Gate is shown in FIG. 14B.

As shown in FIG. 14B, a part where Gate changes from 0 to 1 or from 1 to 0 appears twice in one cycle (region b1) of the carrier wave. That is, the power conversion device 100 operates with one pulse (one rectangular wave) in one cycle of the carrier wave CARR.

On the other hand, a part where Gate changes from 0 to 1 or 1 to 0 appears four times in the subsequent one cycle (region b2) of the carrier wave. That is, the power conversion device 100 operates with two pulses (two rectangular waves) in one cycle of the carrier wave CARR.

Therefore, in the pulse number adjustment unit 97, the arm modulation command Kref and Gate cross each other three or more times in one cycle of the carrier wave, so that the number of the gate pulses increases and switching loss increases. However, increase in the number of the gate pulses provides an effect of improving followability of output voltage to the arm modulation command Kref. Therefore, the number of times the gate signal changes is limited by the gate pulse number upper limit value GCMAX, whereby increase in switching loss can be suppressed in total.

In the example shown in FIG. 14B, the number of times the gate signal Gate changes is at most two (two pulses) in one cycle of the carrier wave CARR, but in a case where, for example, the change rate of the arm modulation command Kref and the change rate of the carrier wave CARR are close to each other, chattering with three or more pulses can occur. Therefore, in order to prevent the number of gate pulses from increasing more than necessary, it is desirable that the gate pulse number upper limit value GCMAX is approximately three pulses (the number of times the gate signal Gate changes is six).

In a case where the gate pulse number upper limit value GCMAX is three pulses, the number of times of switching partially increases only at a part where switching is needed, and the number of times of switching is at most six. Therefore, operation can be continued at a lower frequency than in a case where operation is steadily performed with the carrier wave frequency that is three times the grid frequency. Thus, the frequency is reduced, and increase in switching loss due to increase in the frequency can be suppressed.

The gate pulse number upper limit value GCMAX is not limited to three pulses (six times of change of Gate), and may be set at an optimum value in accordance with the capacitor capacitance of the converter cell 10, the carrier wave frequency, and the like.

As described above, the power conversion device according to the present embodiment 1 is for a MMC of a phase shift PWM type and includes a control unit which drives semiconductor switching elements of converter cells each having a series unit in which a plurality of semiconductor switching elements are connected in series and a capacitor connected in parallel to the series unit. The control unit includes a modulation command generation unit which calculates arm modulation commands respectively for a plurality of positive-side arms and a plurality of negative-side arms on the basis of a command value for voltages to be outputted by the plurality of positive-side arms and the plurality of negative-side arms, a gate signal generation unit which generates gate signals for driving the plurality of semiconductor switching elements, by comparing each calculated arm modulation command with a carrier wave, and a gate signal switchover determination unit which determines whether or not to switch a number of times of ON/OFF change of each gate signal per one cycle of the carrier wave, with respect to a frequency of the carrier wave. The gate signal generation unit generates the gate signals on the basis of a determination result of the gate signal switchover determination unit. Thus, when a result of the gate signal switchover determination unit indicates "switchover", the number of times the gate signal is turned on and off increases, so that it is not necessary to steadily increase the frequency of the carrier wave in operating the power conversion device. Therefore, it is possible to improve operation continuity and suppress increase in switching loss.

During operation at a set carrier wave frequency, if the capacitor voltage of at least one converter cell has gone out of the allowable range, the gate signal switchover determination unit selects the pulse number adjustment unit 97 so as to perform switching of the semiconductor switching elements within a range not greater than the gate pulse number upper limit value GCMAX. Thus, without increasing the frequency of the carrier wave, it is possible to improve operation continuity and suppress increase in switching loss.

Embodiment 2

Hereinafter, a power conversion device according to embodiment 2 will be described with reference to the drawings.

In embodiment 1, the example in which the number of the kinds of the frequency of the carrier wave CARR for driving the switching elements 12U, 12L of the power conversion device 100 is one, has been described, whereas in the present embodiment 2, an example in which the power conversion device in which switching of the switching elements is performed while two or more kinds of the carrier wave frequency are switched is operated, will be described.

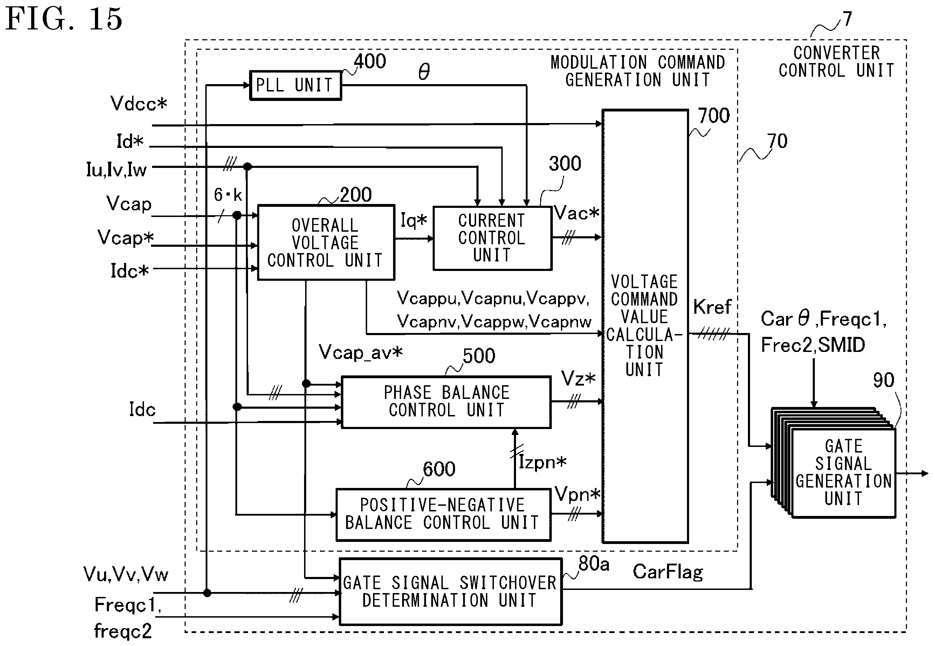

FIG. 15 is a configuration diagram of the converter control unit 7 according to embodiment 2. A gate signal switchover determination unit 80a is different from that in embodiment 1. The other configurations, including the power conversion system, are the same as in embodiment 1, and the description of the configuration and operations is omitted, while differences will be mainly described.

In FIG. 15, the gate signal switchover determination unit 80a according to embodiment 2 receives at least two kinds of carrier wave frequencies Freqc1, Freqc2 (Freqc1 < Freqc2) different from each other, the value Vcap_av* of the average value of all the capacitor voltages outputted from the overall voltage control unit 200, and the AC grid voltages Vv, Vu, Vw.

<Configuration and operation of gate signal switchover determination unit 80a>

In a case where the carrier wave frequency is lower than a predetermined frequency during steady operation of the power conversion device 100, the gate signal switchover determination unit 80a according to the present embodiment 2 determines to switch operation so as to adjust the number of pulses in one carrier wave cycle, instead of generating gate signals with one pulse per one carrier wave cycle.

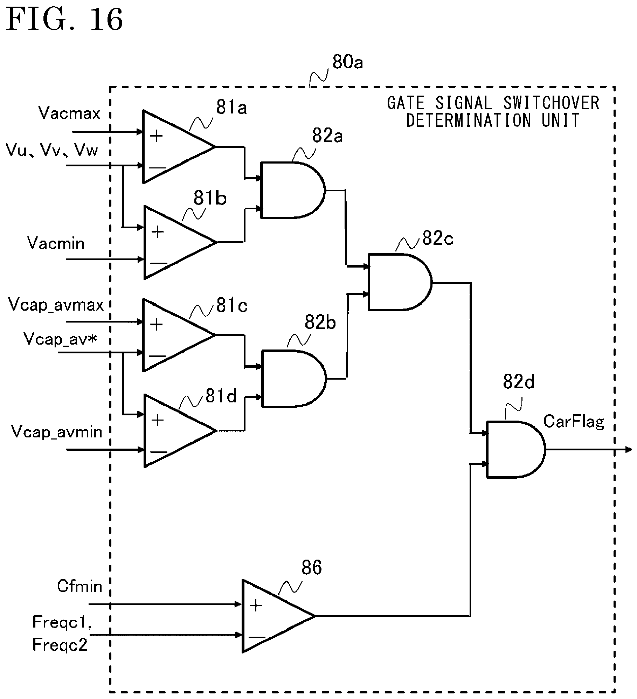

Hereinafter, a configuration and operation of the gate signal switchover determination unit 80a will be described with reference to the drawings. FIG. 16 is a block diagram showing the configuration of the gate signal switchover determination unit 80a according to embodiment 2. The gate signal switchover determination unit 80a receives the AC grid voltages Vu, Vv, Vw detected by the AC voltage detection unit 19, the value Vcap_av* of the average value of the capacitor voltages of all the converter cells outputted from the overall voltage control unit 200, and the frequencies Freqc1, Freqc2 of the carrier wave.

Operations from the comparator 81a to the AND circuit 82c are the same as in FIG. 9 in embodiment 1. That is, the AC grid voltages Vu, Vv, Vw are compared with the predetermined grid voltage upper limit value Vacmax by the comparator 81a, and if the AC grid voltages Vu, Vv, Vw are smaller than the grid voltage upper limit value Vacmax, the comparator 81a outputs 1. In addition, the AC grid voltages Vu, Vv, Vw are compared with the predetermined grid voltage lower limit value Vacmin by the comparator 81b, and if the AC grid voltages Vu, Vv, Vw are equal to or greater than the grid voltage lower limit value Vacmin, the comparator 81b outputs 1. Therefore, if all the AC grid voltages Vu, Vv, Vw are in a range between the upper and lower limit values of the grid voltage, the AND circuit 82a outputs 1. Here, the grid voltage upper limit value Vacmax may be set at 1.1 pu, and the grid voltage lower limit value Vacmin may be set at 0.9 pu, for example, to determine whether the AC grid voltages Vu, Vv, Vw are in a steady range.

The value Vcap_av* of the average value of the capacitor voltages is compared with the predetermined capacitor voltage average value upper limit value Vcap_avmax by the comparator 81c, and if the value Vcap_av* is smaller than the predetermined capacitor voltage average value upper limit value Vcap_avmax, the comparator 81c outputs 1. In addition, the value Vcap_av* is compared with the capacitor voltage average value lower limit value Vcap_avmin by the comparator 81d, and if the value Vcap_av* of the average value of the capacitor voltages is equal to or greater than the capacitor voltage average value lower limit value Vcap_avmin, the comparator 81d outputs 1. Therefore, the AND circuit 82b outputs 1 when the value Vcap_av* of the average value of all the capacitor voltages is equal to or greater than the capacitor voltage average value lower limit value Vcap_avmin and is smaller than the capacitor voltage average value upper limit value Vcap_avmax. Here, the capacitor voltage average value upper limit value Vcap_avmax may be set at 1.05 pu, and the capacitor voltage average value lower limit value Vcap_avmin may be set at 0.95 pu, for example, to determine whether the value Vcap_av* of the average value of the capacitor voltages is in a steady range in which the power conversion device 100 can output desired voltage.

If both of the AC grid voltages Vu, Vv, Vw and the value Vcap_av* of the average value of the capacitor voltages are in the steady range, the AND circuit 82c outputs 1. That is, when the power conversion device 100 is performing steady operation, the AND circuit 82c outputs 1.

In addition, the gate signal switchover determination unit 80a receives two kinds of carrier wave frequencies Freqc1, Freqc2 to be used for the carrier wave CARR for driving the switching elements 12U, 12L of the power conversion device 100, and the carrier wave frequency Freqc1 or the carrier wave frequency Freqc2 is compared with a predetermined carrier wave frequency lower limit value Cfmin by a comparator 86.

If the compared carrier wave frequency (Freqc1 or Freqc2) is smaller than the carrier wave frequency lower limit value Cfmin, the comparator 86 outputs 1. Here, the carrier wave frequency lower limit value Cfmin is set such that, if the carrier wave frequency is equal to or greater than the carrier wave frequency lower limit value Cfmin, operation can be continued even when capacitor voltages change, for example. Therefore, the carrier wave frequency lower limit value Cfmin is set as appropriate in accordance with the capacitances of the capacitors or the like.

Then, in a case where both of the AND circuit 82c and the comparator 86 output 1, the AND circuit 82d sets the gate switchover signal CarFlag at 1. That is, if the carrier wave frequency is low in steady operation, the gate switchover signal CarFlag is set at 1. The gate switchover signal CarFlag outputted from the gate signal switchover determination unit 80a is inputted to the selector 95 of the gate signal generation unit 90 shown in FIG. 10, and the gate signal Gate is generated on the basis of the flowcharts shown in FIG. 12A, FIG. 12B, FIG. 13A, and FIG. 13B.

Specifically, in the present embodiment 2, the frequency relationship is set as Freqc1 < Cfmin ≤ Freqc2. In a case where the power conversion device 100 is performing steady operation, if the carrier wave frequency is Freqc2, the gate switchover signal CarFlag set at 0 is outputted to the gate signal generation unit 90, and thus the 1-pulse/1-carrier wave cycle signal generation unit 99 generates a gate signal with one pulse per one carrier wave cycle. On the other hand, if the carrier wave frequency is Freqc1, the gate switchover signal CarFlag set at 1 is outputted to the gate signal generation unit 90, and thus the pulse number adjustment unit 97 generates a gate signal with pulses whose number is equal to or smaller than the pulse number upper limit value GCMAX and larger than one per one carrier wave cycle.

The carrier wave frequency Freqc1 which is a low frequency is approximately a frequency lower than two times the grid frequency, and the carrier wave frequency Freqc2 which is a high frequency is approximately a frequency equal to or higher than two times the grid frequency. Therefore, it is desirable that the carrier wave frequency lower limit value Cfmin is set at a value close to two times the grid frequency. However, these frequencies are not limited to such values, and may be set as appropriate in accordance with the operation condition of the power conversion device 100, the capacitances of the capacitors described above, or the like.

In a case where the carrier wave frequency is Freqc1, the pulse number adjustment unit 97 generates a gate signal with pulses whose number is equal to or smaller than the pulse number upper limit value GCMAX, and it is desirable that the pulse number upper limit value GCMAX at this time is set so as not to exceed the number of pulses for the carrier wave frequency Freqc2. That is, also in the case where the carrier wave frequency is Freqc1, setting is made so that the number of pulses per unit time does not exceed the number of pulses for the carrier wave frequency Freqc2.

The example in which the number of kinds of the frequency of the carrier wave is two has been described, but the number of kinds is not limited to two. In a case where the number of kinds is three or more, setting may be made such that, for a carrier wave having a frequency that is smaller than the predetermined carrier wave frequency lower limit value Cfmin, or a carrier wave having the lowest frequency, the number of pulses per unit time does not exceed that for a carrier wave having the highest frequency.

As described above, the power conversion device according to embodiment 2 operates using two or more kinds of carrier wave frequencies, and is configured such that, when operation is performed with a carrier wave having a lower frequency than the predetermined carrier wave frequency lower limit value Cfmin, a gate signal is generated with the pulse number upper limit value GCMAX set so as not to exceed the number of pulses per unit time for the carrier wave having the highest frequency. Thus, also when the carrier wave has a low frequency, operation continuity improves and increase in switching loss of the power conversion device can be suppressed.

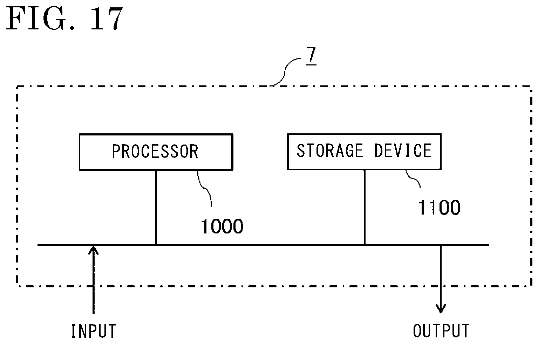

FIG. 17 shows an example of a hardware configuration of the converter control unit 7 in the above embodiments 1 and 2. As shown in FIG. 17, the converter control unit 7 includes a processor 1000 and a storage device 1100 as a processing circuit, for example.

The processor 1000 may be formed by a central processing unit (CPU), an application specific integrated circuit (ASIC), an integrated circuit (IC), a field programmable gate array (FPGA), various logic circuits, various signal processing circuits, and the like. A plurality of processors 1000 that are the same kind or different kinds may be provided and execute processes in a shared manner. The storage device 1100 includes a random access memory (RAM) configured to allow data to be read and written from the processor 1000, a read only memory (ROM) configured to allow data to be read from the processor 1000, and the like. The processor 1000 executes a program inputted from the storage device 1100 such as ROM.

The gate signal generation unit 90 shown in FIG. 4 or FIG. 15 may be included in each converter cell 10 without being provided to the converter control unit 7, and in this case, may have a hardware configuration as shown in FIG. 17.

<Other embodiments>

(1) In FIG. 2A to FIG. 2C, the switching elements 12U, 12L composing the converter cell 10 are shown as IGBTs to which diodes are connected in antiparallel, but they may be MOSFETs as described above. However, using IGBTs provides a higher effect than using MOSFETs.

(2) The semiconductor switching elements are not limited to those formed by a Si (silicon) semiconductor, but may be formed by a wide bandgap semiconductor such as silicon carbide (SiC) or gallium nitride (GaN). The wide bandgap semiconductor has characteristics such as being capable of higher-speed switching, being capable of high-temperature operation, and having a high dielectric breakdown electric field intensity, and therefore is preferably applied to an MMC.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

DESCRIPTION OF THE REFERENCE CHARACTERS

1 power conversion unit
2 AC power grid
3 interconnection transformer
4u, 4v, 4w connection point
5 reactor
6P, 6N DC line
7 converter control unit
8u, 8v, 8w leg circuit
9 arm
10 converter cell
11 output current detection unit (AC current detection unit)
12U, 12L switching element
13 diode element
15 capacitor
16 voltage detection unit
19 AC voltage detection unit
20 arm current detection unit
21, 22 DC voltage detection unit
23 current sensor
70 modulation command generation unit
80, 80a gate signal switchover determination unit
81a, 81b, 81c, 81d, 81e, 81f, 86, 93 comparator
82a, 82b, 82c, 82d AND circuit
83 OR circuit
85 maximum-value-and-minimum-value extraction unit
90 gate signal generation unit
91 carrier wave generator
95 selector
97 pulse number adjustment unit
99 1-pulse/1-carrier wave cycle signal generation unit
100 power conversion device
200 overall voltage control unit
210 first representative value calculation unit
220, 320, 330, 521, 522, 531, 532, 631, 632, 633, 671, 672, 673 controller
240 adder
300 current control unit
310, 520, 560, 660 three-phase/two-phase converter
350, 540 two-phase/three-phase converter
400 PLL unit
500 phase balance control unit
510 second representative value calculation unit
511, 512, 513, 621, 622, 623 filter
550 circulation current calculation unit
600 positive-negative balance control unit
610 third representative value calculation unit

640, 651, 652, 653 multiplier
1000 processor
1100 storage device

**Claims**

1.  A power conversion device comprising:

    a power conversion unit which performs power conversion between AC and DC and has a plurality of leg circuits in which a positive-side arm and a negative-side arm corresponding to each of a plurality of phases are connected in series and connection points therebetween are connected to AC lines for the respective phases, the leg circuits being connected in parallel between positive and negative DC lines; and
    a control unit which controls the power conversion unit, wherein
    the positive-side arms and the negative-side arms each include one or a plurality of converter cells connected in series, the one or each converter cell having a series unit in which a plurality of semiconductor switching elements are connected in series and a capacitor connected in parallel to the series unit,
    the control unit includes

    a modulation command generation unit which calculates arm modulation commands respectively for a plurality of the positive-side arms and a plurality of the negative-side arms on the basis of a command value for voltages to be outputted by the plurality of positive-side arms and the plurality of negative-side arms,
    a gate signal generation unit which generates gate signals for driving the plurality of semiconductor switching elements, by comparing each calculated arm modulation command with a carrier wave, and
    a gate signal switchover determination unit which determines whether or not to switch a number of times of ON/OFF change of each gate signal per one cycle of the carrier wave, with respect to a frequency of the carrier wave, and

    the gate signal generation unit generates the gate signals on the basis of a determination result of the gate signal switchover determination unit.

2.  The power conversion device according to claim 1, wherein
    in a case where voltage of the capacitor exceeds a predetermined voltage range, the gate signal switchover determination unit determines to switch the number of times of ON/OFF change of the gate signal per one cycle of the carrier wave.

3.  The power conversion device according to claim 1, wherein

    as the frequency of the carrier wave, at least two kinds of frequencies are provided, and
    in a case where the frequency of the carrier wave is smaller than a predetermined carrier wave frequency lower limit value, the gate signal switchover determination unit determines to switch the number of times of ON/OFF change of the gate signal per one cycle of the carrier wave.

4.  The power conversion device according to any one of claims 1 to 3, wherein
    where two times of ON/OFF change of the gate signal correspond to one pulse, the gate signal generation unit selectively performs either limiting a number of pulses of the gate signal to one in one cycle of the carrier wave or adjusting the number of pulses of the gate signal to be equal to or smaller than a predetermined allowable number greater than one, on the basis of the result of the gate signal switchover determination unit.

5.  The power conversion device according to claim 3, wherein
    the gate signal generation unit adjusts the number of times of ON/OFF change of the gate signal per unit time with respect to the carrier wave having a lowest frequency among the carrier waves, to be equal to or smaller than the number of times of ON/OFF change of the gate signal per unit time with respect to the carrier wave having a highest frequency among the carrier waves.

# FIG. 1

## FIG. 2A

## FIG. 2B

# FIG. 2C

# FIG. 3

# FIG. 4

CONVERTER CONTROL UNIT ~7

MODULATION COMMAND GENERATION UNIT

PLL UNIT ~400 $\theta$

Vdcc*

Id*

Iu,Iv,Iw

Vcap     6·k

Vcap*

Idc*

OVERALL VOLTAGE CONTROL UNIT ~200

CURRENT CONTROL UNIT ~300

Iq*

Vac*

Vcappu,Vcappu,Vcappv,
Vcapnv,Vcappw,Vcapnw

Vcap_av*

PHASE BALANCE CONTROL UNIT ~500

Vz*

Idc

VOLTAGE COMMAND VALUE CALCU-LATION UNIT ~700

Kref

70

Car $\theta$,Freqc,
SMID,GCMAX

GATE SIGNAL GENERATION UNIT ~90

Izpn*

POSITIVE-NEGATIVE BALANCE CONTROL UNIT ~600

Vpn*

Vu,Vv,Vw

GATE SIGNAL SWITCHOVER DETERMINATION UNIT ~80

CarFlag

EP 4 641 908 A1

# FIG. 5

# FIG. 6

# FIG. 7

EP 4 641 908 A1

# FIG. 8

FIG. 9

FIG. 10

EP 4 641 908 A1

FIG. 11

EP 4 641 908 A1

# FIG. 12A

FIG. 12B

A1

B1

S105

PrevG1 = 0 AND
Cslope < 0

no

yes    S106

Gate=G1

S107

Gate=PrevG1

S108

PrevG1 = 1 AND
Cslope > 0

no

yes    S109

Gate=G1

S110

Gate=PrevG1

S111

DETERMINE GATE SIGNAL

S112

PreG1＝Gate

C1

# FIG. 13A

```
                    ┌─────────────┐
                    │    Start    │
                    └──────┬──────┘
                           │        S201
                    ┌──────┴──────────┐
          ┌────────▶│ INITIALIZATION  │
       ┌──┴──┐      └──────┬──────────┘
       │ E2  │             │        S202
       └─────┘        ◇────┴─────────◇
                      │IS THERE INPUT DATA?│──── no ───┐
                      ◇────┬─────────◇                 │
                           │ yes                   ┌───┴───┐
                           │        S203           │  End  │
                    ┌──────┴──────────────────┐    └───────┘
                    │ INPUT G1, CARR, AND GCMAX│
                    └──────┬──────────────────┘
                           │        S204
                    ◇──────┴───────────────◇
                    │ PRECARR < 0.5 [pu] AND │──── no ───┐
                    │   CARR ≥ 0.5 [pu]      │           │
                    ◇──────┬───────────────◇            │
                           │ yes     S205               │
                    ┌──────┴──────────┐                 │
                    │   GCCount=0     │                 │
                    └──────┬──────────┘◀────────────────┘
                           │        S206
                    ◇──────┴──────◇
                    │  G1 = 1 ?    │──── no ──────────┐
                    ◇──────┬──────◇                   │
                           │ yes                       │
                           │     S207                  │     S212
                    ◇──────┴──────◇             ◇──────┴──────◇
                    │ PrevG1 = 0 ? │── no       │ PrevG1 = 1 ? │── no
                    ◇──────┬──────◇    │        ◇──────┬──────◇    │
                           │ yes       │               │ yes       │
                        ┌──┴──┐     ┌──┴──┐          ┌──┴──┐     ┌──┴──┐
                        │ A2  │     │ B2  │          │ C2  │     │ D2  │
                        └─────┘     └─────┘          └─────┘     └─────┘
```

# FIG. 13B

FIG. 14A

FIG. 14B

# FIG. 15

CONVERTER CONTROL UNIT 7

MODULATION COMMAND GENERATION UNIT

PLL UNIT 400 → θ

Vdcc*
Id*
Iu,Iv,Iw
Vcap        6·k
Vcap*
Idc*

OVERALL VOLTAGE CONTROL UNIT 200 → Iq*

CURRENT CONTROL UNIT 300 → Vac*

VOLTAGE COMMAND VALUE CALCULATION UNIT 700

70

Vcappu,Vcapnu,Vcappv, Vcapnv,Vcappw,Vcapnw

Vcap_av*

PHASE BALANCE CONTROL UNIT 500 → Vz*

Idc

Kref

Car θ ,Freqc1, Frec2,SMID

GATE SIGNAL GENERATION UNIT 90

Izpn*

POSITIVE-NEGATIVE BALANCE CONTROL UNIT 600 → Vpn*

Vu,Vv,Vw

GATE SIGNAL SWITCHOVER DETERMINATION UNIT 80a

CarFlag

Freqc1, freqc2

EP 4 641 908 A1

# FIG. 16

FIG. 17

## INTERNATIONAL SEARCH REPORT

International application No.

**PCT/JP2022/047290**

| A. | CLASSIFICATION OF SUBJECT MATTER |
|---|---|

*H02M 7/49*(2007.01)i; *H02M 7/48*(2007.01)i
FI:   H02M7/49; H02M7/48 X

According to International Patent Classification (IPC) or to both national classification and IPC

| B. | FIELDS SEARCHED |
|---|---|

Minimum documentation searched (classification system followed by classification symbols)

H02M7/00-7/98

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/215106 A1 (MITSUBISHI ELECTRIC CORPORATION) 13 October 2022 (2022-10-13)<br>entire text, all drawings | 1-5 |
| A | WO 2019/138550 A1 (MITSUBISHI ELECTRIC CORPORATION) 18 July 2019 (2019-07-18)<br>entire text, all drawings | 1-5 |
| A | JP 2019-216508 A (TOSHIBA MITSUBISHI-ELECTRIC INDUSTRIAL SYSTEMS CORPORATION) 19 December 2019 (2019-12-19)<br>entire text, all drawings | 1-5 |
| A | WO 2021/199150 A1 (MITSUBISHI ELECTRIC CORPORATION) 07 October 2021 (2021-10-07)<br>entire text, all drawings | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 February 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/047290** |

| Patent document cited in search report | | | Publication date (day/month/year) | Patent family member(s) | Publication date (day/month/year) |
| --- | --- | --- | --- | --- | --- |
| WO | 2022/215106 | A1 | 13 October 2022 | (Family: none) | |
| WO | 2019/138550 | A1 | 18 July 2019 | US 2021/0058007 A1 entire text, all drawings EP 3739744 A1 | |
| JP | 2019-216508 | A | 19 December 2019 | (Family: none) | |
| WO | 2021/199150 | A1 | 07 October 2021 | US 2023/0049159 A1 entire text, all drawings EP 4131766 A1 | |

Form PCT/ISA/210 (patent family annex) (January 2015)

**EP 4 641 908 A1**

**REFERENCES CITED IN THE DESCRIPTION**

**Patent documents cited in the description**

- JP 2021197809 A